# EUROPÄISCHE PATENTSCHRIFT

(11) **EP 3 019 325 B1**
(45) Veröffentlichungstag und Bekanntmachung des Hinweises auf die Patenterteilung: **09.09.2020**
(21) Anmeldenummer: 14750301.5
(22) Anmeldetag: 02.07.2014
(51) Int. Cl.: B29C 49/42, B65D 1/02, B29C 65/74, B29C 65/02, B29C 65/56, B29C 65/72, B29C 65/48, B29L 22/00, B29C 49/48, B65D 23/10

(54) **GEFÄSSEINRICHTUNG, WERKZEUGEINRICHTUNG ZUR HERSTELLUNG EINER ZUMINDEST TEILWEISE UND/ODER ZUMINDEST BEREICHSWEISE BLASGEFORMTEN GEFÄSSEINRICHTUNG, HERSTELLUNGSVERFAHREN**
VASCULAR DEVICE, TOOLING FOR PRODUCING ONE, AT LEAST IN PART AND/OR AT LEAST IN CERTAIN REGIONS, BLOW FORMED VASCULAR DEVICE, MANUFACTURING PROCESS
DISPOSITIF VASCULAIRE, OUTILLAGE POUR LA FABRICATION D'UN DISPOSITIF VASCULAIRE FORMÉ PAR SOUFFLAGE MOULAGE AU MOINS EN PARTIE ET/OU AU MOINS SUR CERTAINS DOMAINES, PROCÉDÉ DE FABRICATION

(30) Priorität: 08.07.2013 EP 13405081
(43) Veröffentlichungstag der Anmeldung: 18.05.2016
(73) Patentinhaber: ISP Technology AG, 9450 Altstätten SG (CH)
(72) Erfinder: MAHRLE, Roger, 9242 Oberuzwil SG (CH); CLARKE, Peter Reginald, Graffham, Petworth West Sussex GU28 0NU (GB)
(74) Vertreter: EGLI-EUROPEAN PATENT ATTORNEYS
(86) Internationale Anmeldenummer: PCT/CH2014/000094
(87) Internationale Veröffentlichungsnummer: WO 2015/003279

(56) Entgegenhaltungen:
- EP-A1- 0 759 399
- WO-A1-90/13490
- JP-A- S5 759 725
- US-A- 4 816 093

## Beschreibung

Die Erfindung bezieht sich auf eine Gefäßeinrichtung, insbesondere Flascheneinrichtung und/oder Kanistereinrichtung, welche als zumindest teilweise und/oder zumindest bereichsweise blasgeformter Kunststoffformkörper ausgebildet ist und zumindest eine Kunststoffverbindungsnaht zur fluiddichten, vorzugsweise zur gasdichten Verbindung zumindest zweier, zumindest bereichsweise flächenartig ausgebildeter Kunststoffwerkstückbereiche aufweist. Weiterhin bezieht sich die Erfindung auf eine Werkzeugeinrichtung zur Herstellung einer zumindest teilweise und/oder zumindest bereichsweise blasgeformten Gefäßeinrichtung und ein Verfahren zur Herstellung einer fluiddichten, vorzugsweise einer gasdichten Kunststoffverbindungsnaht bei einer Gefäßeinrichtung. Die Verwendung von Kunststoffen setzt sich in zunehmendem Maße durch, insbesondere auch in unterschiedlichsten Gebieten des täglichen Lebens. Ein Beispiel von vielen für die Verwendung von Kunststoffen besteht in der Nutzung von Kunststoffen für behälterartige Gegenstände, wie beispielsweise Kunststoffflaschen oder Kunststoffkanister. Sowohl bei Kunststoffflaschen, als auch bei Kunststoffkanistern handelt es sich um in aller Regel verschließbare Gefäße, die einen vergleichsweise großen Hohlraum zur Aufnahme von Gütern, wie insbesondere von Flüssigkeiten, aufweisen (wobei es sich bei den Flüssigkeiten auch um vergleichsweise zähflüssige Substanzen wie Honig, Gele und derartige Materialien handeln kann; bei den im Gefäß aufzunehmenden Gütern kann es sich selbstverständlich auch um vorzugsweise schüttbare Feststoffe handeln, wie beispielsweise Granulate oder Pulver, insbesondere hygroskopische Granulate oder Pulver). Die Unterscheidung von Flaschen einerseits und Kanistern andererseits erfolgt in der Regel basierend auf dem Volumen derselben, zum Teil aber auch zusätzlich oder alternativ basierend auf deren Form. Typischerweise wird bei Volumina von mehr als etwa 5 bis 10 l von Kanistern gesprochen, wohingegen bei niedrigeren Volumina tendenziell eher von Flaschen gesprochen wird. Darüber hinaus werden eher quaderartig geformte Hohlkörper eher als Kanister bezeichnet, wohingegen eher zylindrische Körper tendenziell eher als Flasche bezeichnet werden. In der Praxis ist die Trennung zwischen Kanister und Flasche oftmals fließend.

Während die Verwendung von Kunststoffbehältern für Chemikalien (auch Haushaltschemikalien wie beispielsweise Waschmittel, Putzmittel und dergleichen) bereits seit Jahrzehnten weitgehend etabliert ist, hat sich der Einsatz von Kunststoffbehältern auch für die Verpackung von Lebensmitteln, insbesondere auch von Flüssigkeiten, wie beispielsweise Getränken, insbesondere kohlensäurehaltigen Getränken und dergleichen, in den letzten Jahren verstärkt durchgesetzt, wobei in den Behältern ein Druck bis zu etwa 10 bar entstehen kann.

Unabhängig vom Verwendungszweck ist es in aller Regel erwünscht, dass Kunststoffbehälter (aber auch anderweitige Behälter) ab einer gewissen Größe mit einer Art von Handgriff versehen sind, um so ein leichteres Tragen bzw. eine leichtere Handhabung des Gefäßes zu ermöglichen. Obgleich es durchaus auch möglich ist, Handgriffe unter Verwendung von "Sacklöchern" zu realisieren (die Öffnung für den Handgriff ist also nicht durchgängig, sondern weist nach wie vor eine Art Trennwand auf, die zwei einander gegenüberliegende Griffmulden voneinander trennt), so ist es in der Regel erwünscht, dass die Öffnung für den Handgriff durchgängig ("offen") ist. In der Regel wird eine derartige Ausgestaltung als ästhetisch vorteilhafter angesehen. Darüber hinaus steigt der praktische Gebrauchswert des Handgriffs in der Regel an, da hierdurch ein leichteres Greifen sowohl von Rechtshändern als auch von Linkshändern, sowie von Personen mit unterschiedlichen Handgrößen möglich wird.

Weiterhin ist es erwünscht, dass insbesondere im Bereich des Handgriffs (insbesondere in Bereichen, in denen die Hand Innenfläche bzw. die Finger des Benutzers zu liegen kommen) möglichst keine scharfkantigen und/oder hervorstehenden Kanten und Nähte vorhanden sind. Derartige Kanten und Nähte sind beim Tragen zumindest unangenehm, sofern sie nicht sogar ein gewisses Verletzungsrisiko darstellen.

Erwünscht ist es bei derartigen Handgriffen darüber hinaus, dass der Handgriff möglichst vollständig als Hohlraum ausgeführt ist. Auf diese Weise kann ein größeres Innenvolumen für die Aufnahme von Flüssigkeiten zur Verfügung gestellt werden. Sinnvoll ist es dabei insbesondere, wenn der betreffende Hohlraumbereich an beiden Verbindungspunkten des Handgriffs mit dem Flaschenkörper (also nach "oben" und "unten" hin) offen ist, damit unter möglichst allen Einsatzbedingungen und Kippwinkeln kein "Totvolumen" verbleibt, in dem sich Restflüssigkeitsmengen sammeln könnten.

Eine weitere Forderung besteht zwischenzeitlich darin, dass der betreffende Gegenstand nach Möglichkeit nach dessen Gebrauch besonders gut und einfach dem Recycling zugeführt werden kann. Diese Forderung kann insbesondere dadurch erfüllt werden, indem der betreffende Gegenstand möglichst aus einem einzigen Material gefertigt ist. Aber auch im Falle von so genannten "Mulitlayer-Rohlingen", die aus mehreren Materialien gefertigt sind, kann durch eine geeignete Wahl von Materialkombinationen und Verbindungen der unterschiedlichen verwendeten Materialien untereinander zwischenzeitlich eine gute Recycling-Fähigkeit realisiert werden. Die Forderung nach einer guten Recycling-Fähigkeit wird vermutlich in den kommenden Jahren zunehmend Bedeutung erlangen.

Selbstverständlich sollten die betreffenden Gefäße möglichst schnell und kostengünstig herzustellen sowie zu transportieren sein. Dies ist insbesondere für vergleichsweise niedrigpreisige Produkte von besonderer Bedeutung, wie beispielsweise für Getränke (hier insbesondere Trinkwasser, Mineralwasser, Limonaden und dergleichen) oder bestimmte (Haushalts-)Chemikalien (beispielsweise Frostschutzmittel für Kraftfahrzeugscheibenreinigungsanlagen).

Während es bei manchen Kunststoffmaterialien zwischenzeitlich durchaus praktikable und kostengünstige Verfahren gibt, um Handgriffe auszubilden, die zumindest einen Großteil der genannten Anforderungen erfüllen, so tut man sich in bestimmten Anwendungsgebieten, wie beispielsweise im Lebensmittelbereich, nach wie vor schwer. In bestimmten Anwendungsgebieten (wie beispielsweise im bereits erwähnten Lebensmittelbereich) ist nämlich die Verwendung von PET besonders vorteilhaft, da dieses Material unterschiedliche vorteilhafte Eigenschaften in sich vereint. So ist PET im Lebensmittelbereich von Vorteil, weil es geschmacksneutral, vergleichsweise stabil (also beispielsweise auch zur Aufnahme von kohlensäurehaltigen Getränken geeignet) sowie vergleichsweise gasdiffusionsdicht ist (bzw. mit geeigneten Verfahren die ohnehin bereits vorhandene Gasdiffusionsdichtigkeit vergleichsweise leicht weiter erhöht werden kann; dies ist beispielsweise erforderlich, damit der in der Atmosphäre enthaltene Sauerstoff nicht in die Flasche eindringen kann und dort die Lebensmittel geschmacklich verändern, bzw. ein Verderben der darin gelagerten Lebensmittel bewirken kann, oder aber auch wenn im Behälter hygroskopische Materialien wie beispielsweise Pulver und dergleichen aufgenommen sind, und das Eindringen von Wasser(-dampf) verhindert werden soll). Weiterhin ist PET auch durchsichtig, was speziell im Lebensmittelbereich als vorteilhafte Eigenschaft angesehen wird. Als weitere Anwendungsgebiete, in denen die Verwendung von PET vorteilhaft sein kann, sollen (ohne Anspruch auf Vollständigkeit) auch die Verpackung von (Haushalts-)Chemikalien (beispielsweise von Reinigungsmitteln und dergleichen), sowie von kosmetischen Produkten (beispielsweise von Parfüms oder Badezusätzen) genannt werden.

Ein großes Problem bei der Verwendung von PET ist jedoch, dass sich zwei PET-Teile unter vertretbarem Aufwand nicht bzw. kaum ausreichend stabil miteinander verbinden lassen, wenn bestimmte optische Anforderungen zu erfüllen sind. Zwar ist es beispielsweise möglich, dass zwei PET-Bereiche übereinander gelegt werden und mittels Ultraschallschweißen miteinander verbunden werden; die hierbei entstehende Schweißnaht mit einer Breite von typischerweise 1 bis 2 mm ist jedoch oftmals nicht ausreichend mechanisch stabil und in der Regel optisch leicht erkennbar, zum Teil sogar als milchweiße (und undurchsichtige) Bahn vom Auge klar erkennbar. Wenn jedoch eine Verbindung von zwei PET-Bereichen erfolgen soll, wobei im Bereich der Verbindung die "optische Ununterscheidbarkeit" bzw. "Durchsichtigkeit" des Materials erhalten bleiben soll, treten Probleme auf. Dies liegt in den intrinsischen Eigenschaften von PET begründet, da PET eine hohe Neigung zur Kristallisation (zum Teil auch als Selbstkristallisation bezeichnet) zeigt. Insbesondere kommt es schon kurz oberhalb der Glasübergangstemperatur zu einer starken Kristallisationsneigung (typischerweise im Minutenbereich, zum Teil auch kürzer).

Dadurch sind im Stand der Technik bekannte Verfahren zur Ausbildung von Durchbrüchen bzw. durchgängigen Handgriffen, bei denen Teilbereiche des Kunststoffbehälters zunächst nach innen verformt werden, anschließend Verschlussnähte ausgebildet werden und die dabei entstandenen "überflüssigen" Wandbereiche durch Stanzen entfernt werden, nicht bzw. kaum verwendbar. Insbesondere im Lebensmittelbereich oder im kosmetischen/medizinischen Bereich müssen die Behälter nämlich mit einer sehr hohen Wahrscheinlichkeit ausreichend dicht sein (beispielsweise um Gesundheitsgefährdungen durch Verkeimungen effektiv zu verhindern). Darüber hinaus werden im Haushaltsbereich (beispielsweise Haushaltschemikalien, Lebensmittel, Kosmetika) die Behälter oftmals vergleichsweise rau behandelt, weil sie beispielsweise in Taschen oder Rucksäcken mitgeführt werden und/oder hin und wieder auch einmal zu Boden fallen können. Derartige Belastungen muss der Kunststoffbehälter aufnehmen können, ohne dass es zu einer Undichtigkeit desselben kommt.

Zur Lösung des Problems wurden zum Teil auch verbesserte PET-Mischungen vorgeschlagen, bei denen sich Nähte besser miteinander verbinden lassen. Eine Verwendung derartiger verbesserter PET-Materialien hat sich jedoch nach wie vor nicht durchsetzen können, weil die betreffenden Kunststoffmaterialien zu teuer sind.

Ein weiteres Problem, speziell in der Lebensmittelindustrie (insbesondere bei Getränkeabfüllbetrieben), ist die Anlieferung der noch unbefüllten Flaschen beim Abfüllbetrieb. Eine (an sich denkbare) Anlieferung der vollständig ausgebildeten Flaschen beim Abfüllbetrieb, wo diese befüllt werden, erweist sich als sehr unwirtschaftlich. Denn hier müssen große Volumina bei geringer Masse transportiert werden was zu einem entsprechend unwirtschaftlichen Transport führt (entsprechendes gilt auch für die Lagerung der noch unbefüllten Flaschen).

Dementsprechend hat es sich durchgesetzt, dass die Abfüllbetriebe mit sogenannten PET-Rohlingen (zum Teil auch als Petlinge oder als PET-Preformlinge bezeichnet) beliefert werden. Diese weisen eine kompakte Form auf. Die PET-Rohlinge werden in gesonderten Betrieben durch (in der Regel) Spritzgussverfahren gefertigt und als Rohling an die Abfüllbetriebe geliefert. Hier werden diese durch Blasformverfahren bzw. Streckblasformverfahren zu den abfüllbereiten Flaschen verformt. Das Volumen erhöht sich dabei in der Regel um zumindest das 10- bis 20-fache. Es ist leicht einsichtig, welcher Transportaufwand bzw. Lagerungsaufwand hierdurch eingespart werden kann. Ebenfalls aus Volumengründen ist es erwünscht, dass die Handgriffe erst beim Abfüllbetrieb ausgeformt bzw. angeformt werden.

Diese Art der Logistik (Anlieferung von PET-Rohlingen beim Abfüllbetrieb, wo diese vor Ort blasgeformt bzw. streckblasgeformt werden) sollte dementsprechend auch bei der Verwendung von PET-Flaschen mit Handgriffen beibehalten werden können. Darüber hinaus ist es besonders erwünscht, dass kostengünstige und in großen Mengen verfügbare Standard-PET-Rohlinge weiter verwendet werden können.

Bisher vorgeschlagene Verfahren bzw. Vorrichtungen weisen in aller Regel zumindest einen, meist jedoch mehrere Nachteile im Sinne der obigen Beschreibung auf.

In den Druckschriften EP 1 853 416 B1, EP 2 292 401 B1 sowie EP 2 103 413 B1 sind unterschiedliche Herstellungsverfahren für streckgeblasene Kunststoffbehälter beschrieben, mit denen ein Behälter mit eingeformtem Griff hergestellt werden kann. Dabei wird in der Streckblasform eine Anordnung von zwei einander gegenüberliegenden, beweglichen Stempeln verwendet. Diese beweglichen Stempel werden aufeinander zu bewegt (wobei in EP 2 103 413 B1 zusätzlich vorgeschlagen wird, dass diese vor der Bewegung aufeinander zu zunächst voneinander weg bewegt werden, sodass sich eine Art beidseitig hervorstehendes Fischauge bildet; hierdurch soll die Wandstärke des fertigen Kunststoffformkörpers möglichst homogen werden), sodass zwei Wandbereiche des Kunststoffbehälters durch Druckbeaufschlagung bei entsprechender Temperatur (die Stempel sind vorzugsweise beheizt) miteinander verbunden werden. Dafür wird es als in der Regel vorteilhaft beschrieben, wenn der eingeformte Handgriff nicht-durchgängig ist; die miteinander verbundenen Wände also in der fertigen Flasche verbleiben (Ausbildung von Griffmulden anstatt eines "echten" Handgriffs). Lediglich als Option wird zum Teil ausgeführt, dass man einen Teil dieser entstehenden "Doppelwand" herausstanzen kann. Bereits hieran zeigt sich, dass bei den dort vorgeschlagenen Verfahren im Bereich der Griffmuldennähte keine ausreichende Fluiddichtigkeit realisiert werden kann, insbesondere wenn Teile der Doppelwand herausgestanzt werden. Ein weiterer Nachteil ist die Entstehung von meist scharfen Kanten, wenn die betreffenden Wände herausgestanzt werden. Die resultierende Flasche ist aufgrund der entstehenden scharfen Kanten zumindest unangenehm zu tragen (insbesondere wenn die befüllte Flasche relativ schwer ist; bei einer 2 l Flasche muss man mit einem Gewicht von gut 2 kg rechnen). Zum Teil kann diese scharfe Kante aber auch ein Verletzungsrisiko darstellen, was verständlicherweise unerwünscht ist.

Eine andere Herangehensweise ist in den Druckschriften US 2011/0064899 A1, WO 2005/042230 A1, US 2005/0163952 A1, US 2004/0108627 A1, WO 01/12515 A1, EP 0 805 012 A1 oder WO 96/33063 A1 gewählt. Bei diesen Verfahren ist es jedoch erforderlich, einen speziellen PET-Rohling zu verwenden. Die Herstellung eines solchen PET-Rohlings ist jedoch vergleichsweise aufwändig. Darüber hinaus wird durch das resultierende vergrößerte Volumen der Rohlinge der Transport derselben erschwert. Ein weiteres Problem besteht darin, dass es erforderlich ist, die PET-Rohlinge mit einer korrekten Winkellage in die Blasformmaschine einzulegen. Auch dies stellt einen zusätzlichen Aufwand dar. Darüber hinaus ist es bei den meisten der dort beschriebenen Verfahren bzw. Vorrichtungen nicht möglich, einen hohlen Handgriff zu realisieren, was entsprechend nachteilig ist. Am weitestgehend fortgeschritten ist hierbei das in WO 2005/042230 A1 beschriebene Verfahren bzw. die dort beschriebene Vorrichtung. Mit diesem Verfahren ist es (unter Verwendung eines speziellen Rohlings) möglich, eine Flasche mit einem hohlen Handgriff herzustellen, der gemäß einer besonderen Ausführungsform auch an beiden Verbindungspunkten mit dem Flaschenkörper fluiddurchlässig verbunden sein kann. Ein Nachteil der dort beschriebenen Verfahren ist jedoch nicht nur das Erfordernis eines speziellen PET-Rohlings, sondern insbesondere auch die sehr komplizierte Maschine, die entsprechend langsam arbeitet, teuer in der Anschaffung und wartungsintensiv ist.

Schließlich sind in der Europäischen Patentschrift EP 1 763 427 B1 noch ein Kunststoffbehälter mit angeformtem Griffteil sowie ein Herstellungsverfahren für diesen beschrieben. Gemäß dem dort beschriebenen Verfahren ist es möglich, einen zylindrisch geformten Standard-PET-Rohling zur Ausbildung der Flasche verwenden zu können. Es wird also eine Art "Stummelgriff" ausgebildet. Ein offensichtlicher Nachteil der dort beschriebenen Flasche bzw. des dort beschriebenen Herstellungsverfahrens ist, dass der Handgriff lediglich an einer Seite mit dem Flaschenkörper verbunden ist und dementsprechend auch nur an einer Seite mit dem Flaschenhohlraum fluidisch in Verbindung steht. Die resultierende Flaschenform wird von vielen als ästhetisch unbefriedigend empfunden. Darüber hinaus weist der Handgriff eine nur eingeschränkte Stabilität auf. Ein weiteres Problem ist, dass bei der Benutzung der dort beschriebenen Flasche leicht Restflüssigkeitsmengen in der Flasche verbleiben können, was ebenfalls unerwünscht ist.

In JP S57 59725 A ist ein Formwerkzeug offenbart, in dem ein Kunststoffformrohling geblasen werden kann. Mittels zweier Stempel können zwei Bereiche der Kunststoffwand aufeinander gepresst werden und dadurch aneinander befestigt werden. Anschließend kann mit einem Schneidwerkzeug ein innenliegender Bereich des zusammengepressten Wandbereichs ausgestanzt werden.

In EP 0 759 399 A1 ist ein Behälter offenbart, der eine äußere Kunststoffwand und eine daran befestigte innere Kunststoffwand aufweist. Die innere Kunststoffwand kann sich bei einer Entleerung des Behälters von der äußeren Wand ablösen.

In US 4,816,093 A wird ein Verfahren zur Herstellung eines lamentierten Containers vorgeschlagen. Dieser weist zwei nicht fest miteinander verbundene Wände auf, nämlich eine dickere äußere Wand und eine dünnere innere Wand.

In WO 90/13490 A ist ein Behälter beschrieben, der einen Behälterkörper und einen Endbereich aufweist, die jeweils freie Enden mit Kunststoffmaterial aufweisen. Sie werden dadurch miteinander verbunden und versiegelt, dass die freien Enden einander gegenüberliegend platziert und eingerollt werden.

Somit besteht nach wie vor ein Bedarf an einer gegenüber dem Stand der Technik verbesserten Gefäßeinrichtung, an einer gegenüber dem Stand der Technik verbesserten Werkzeugeinrichtung zur Herstellung einer zumindest teilweise und/oder zumindest bereichsweise blasgeformten Gefäßeinrichtung sowie einem gegenüber dem Stand der Technik verbesserten Verfahren zur Herstellung einer fluiddichten, vorzugsweise einer gasdichten Kunststoffverbindungsnaht bei einer Gefässeinrichtung.

Die vorliegend vorgeschlagene Gefäßeinrichtung, die vorliegend vorgeschlagene Werkzeugeinrichtung und das vorliegend vorgeschlagene Verfahren lösen die betreffenden Aufgaben.

Es wird eine Gefäßeinrichtung, insbesondere Flascheneinrichtung und/oder Kanistereinrichtung, vorgeschlagen, welche als zumindest teilweise und/oder zumindest bereichsweise blasgeformter Kunststoffformkörper ausgebildet ist und zumindest eine Kunststoffverbindungsnaht zur fluiddichten, vorzugsweise gasdichten Verbindung zumindest zweier, zumindest bereichsweise flächenartig ausgebildeter Kunststoffwerkstückbereiche aufweist.

Gemäss der Erfindung ist die Kunststoffverbindungsnaht zu²mindest abschnittsweise als unter Belastung festigkeitsunterstützende Hintergreifeinrichtung ausgebildet, derart, dass sich zumindest bei einer in einer Standard-Belastungsrichtung einwirkenden Belastung auf Zug ihre Verbindungsfestigkeit erhöht.

Es wird insbesondere vorgeschlagen, die Kunststoffverbindungsnaht zur fluiddichten, vorzugsweise zur gasdichten Verbindung zumindest zweier, zumindest bereichsweise flächenartig ausgebildeter Kunststoffwerkstückbereiche derart auszubilden, dass die Kunststoffverbindungsnaht zumindest abschnittsweise als unter Belastung festigkeitsunterstützende Kunststoffverbindungsnaht ausgeführt ist, derart, dass sich zumindest bei einer in einer Standard-Belastungsrichtung einwirkenden Belastung ihre Verbindungsfestigkeit erhöht. Vorzugsweise befindet sich zumindest ein Teil der festigkeitsunterstützenden Kunststoffverbindungsnaht in zumindest einem der flächenartig ausgebildeten Kunststoffwerkstückbereiche. Unter einem Fluid kann insbesondere eine Flüssigkeit mit im Wesentlichen beliebiger Viskosität verstanden werden, speziell eine wässrige Flüssigkeit bzw. Wasser. Grundsätzlich kann es sich bei dem Fluid aber um eine beliebige Art von Fluid/Flüssigkeit handeln, wie beispielsweise Chemikalien, Putzmittel oder auch Lebensmittel (Säfte, Limonaden, Wasser, Milch, Milchmixgetränke, Honig) und dergleichen. Vorzugsweise ist die Verbindung jedoch nicht nur fluiddicht, sondern auch gasdicht ausgeführt. Dadurch kann einerseits das Entweichen von Gasen verhindert werden (wie beispielsweise das Entweichen von Kohlendioxid aus kohlendioxidhaltigen Getränken) andererseits das Eindringen von Gasen verhindert werden (insbesondere von Luftsauerstoff, der zu einer Oxidation, Geschmacksverfälschung und/oder einem Verderben von Lebensmitteln führen könnte oder aber auch von Feuchtigkeit, was beispielsweise im Falle hygroskopischer Substanzen zu einer Veränderung der betreffenden Substanz, beispielsweise durch Verklumpen eines Pulvers, führen könnte; in Letzterem Fall könnte man beispielsweise an Instant-Getränkepulver oder dergleichen denken). Unter einer "Dichtigkeit" (insbesondere einer "Gasdichtigkeit") kann insbesondere eine Dichtigkeit verstanden werden, die an den jeweiligen Einsatzzweck angepasst ist. Beispielsweise lässt sich eine Gasdiffusion durch Kunststoffmaterial nie (vollständig) verhindern. Dementsprechend ist es auch völlig ausreichend, wenn die Kunststoffverbindungsnaht eine Dichtigkeit aufweist, die ungefähr der Dichtigkeit des Kunststoffmaterials selbst entspricht. Darüber hinaus ist eine Gasdichtigkeit gegenüber bestimmten Gasen auch unerheblich bzw. nicht erforderlich. Rein beispielhaft soll in letzterem Fall eine Heliumdichtigkeit oder eine Wasserstoffdichtigkeit genannt werden. Eine Heliumdichtigkeit ist beispielsweise im Zusammenhang mit Lebensmitteln oftmals unerheblich, da Helium inert ist. Darüber hinaus ist Helium in der Regel zu teuer, um als Schutzgas für die Ausbildung einer Schutzgasatmosphäre verwendet zu werden (hier findet üblicherweise Stickstoff Verwendung; dementsprechend sollten das Kunststoffmaterial und/oder die Kunststoffverbindungsnaht stickstoffdicht sein). Wasserstoff wiederum kommt (wie im Übrigen auch Helium) beispielsweise in Lebensmitteln nicht in relevanten Anteilen vor und ist auch in der natürlichen Atmosphäre in nur geringen Mengen enthalten. Bei den miteinander zu verbindenden Kunststoffwerkstückbereichen kann es sich um (zunächst) voneinander unabhängige Bereiche verschiedener Werkstücke handeln (beispielsweise Zusammenfügen von zwei oder mehr Teilen zu einem Gesamtwerkstück, wie beispielsweise von zwei Halbschalen zu einem Gefäß) oder aber auch um unterschiedliche (End-) Bereiche" ein und desselben Werkstücks (beispielsweise zylinderartiges Zusammenfügen einer Platte zu einem Gefäß oder Ausbildung von inneren Öffnungen, wie insbesondere zur Ausbildung von Handgriffen aus einem Standard-PET-Rohling mit einem Blasformverfahren bzw. Streckblasformverfahren). Unter Kunststoffen sind insbesondere beliebige Polymere zu verstehen, wie rein beispielhaft PET (Polyethylenterephthalat) Polyolefine, PS (Polystyrene), PVC (Polyvinylchlorid), PLA (Polylactide), PP (Polypropylen) und dergleichen. Unter einer Verbindungsnaht kann eine grundsätzlich beliebige Verbindung mit und/oder ohne Zuhilfenahme von zusätzlichen Verbindungsmitteln (Klebstoffen) bzw. Haftvermittlern und dergleichen verstanden werden. Rein beispielhaft sind in diesem Zusammenhang (teilweise) Verschmelzvorgänge, Schweißvorgänge, Ultraschallschweißvorgänge, (Heiß-) Klebevorgänge und dergleichen (gegebenenfalls auch eine Kombination zweier oder mehrerer Verfahren miteinander) zu verstehen. Die Standard-Belastungsrichtung der Kunststoffverbindungsnaht bemisst sich am jeweiligen Einsatzzweck und ist eine Belastung auf Zug (bzw. mit zumindest einer Vektorkomponente, die in Zugrichtung wirkt). Durch die spezielle Ausgestaltung der vorliegend vorgeschlagenen Kunststoffverbindungsnaht führt diese Belastung jedoch im Gegensatz zu einer Standard-Verbindungsnaht (wie beispielsweise einer Stoßnaht, einer überlappende Verbindung und dergleichen) nicht zu einer Belastung einer beispielsweise stoffschlüssigen Verbindung (Schweißvorgänge) oder eines Klebstoffmaterials im Bereich der Naht, sondern führt ganz im Gegenteil zu einer (mechanischen) Stabilisierung der Verbindung. Beispielsweise kann dies dadurch realisiert werden, dass zumindest Teilbereiche der (Oberflächen der) Kunststoffverbindungsnaht bei einer Belastung durch Zugkräfte zusammengezogen werden. Diese festigkeitsunterstützende Wirkung muss sich nicht über die (im Wesentlichen) gesamte Länge der Kunststoffverbindungsnaht erstrecken. Es kann durchaus ausreichend sein, dass beispielsweise in regelmäßigen Abständen ein derartiger festigkeitsunterstützender Nahtabschnitt vorgesehen wird, während dazwischenliegend (normale) Verbindungsnähte nach dem Stand der Technik vorgesehen werden. Bevorzugt ist es jedoch, wenn möglichst große Anteile der Kunststoffverbindungsnaht festigkeitsunterstützend ausgeführt sind, da hierdurch die Stabilität und Dichtigkeit der Verbindungsnaht erhöht werden kann. Die vorgeschlagene Ausbildung der Kunststoffverbindungsnaht setzt in aller Regel eine gewisse Eigenstabilität bzw. Steifigkeit des betreffenden Bereichs des Kunststoffwerkstückbereichs voraus. Dies ist jedoch bei Standard-Kunststoffmaterialien häufiger gegeben (und insbesondere bei PET der Fall). Insbesondere ist darauf hinzuweisen, dass dann, wenn die Kunststoffverbindungsnaht größere Kräfte aufnehmen muss, auch die Kunststoffwerkstückbereiche eine entsprechende Dicke aufweisen müssen, um der entsprechenden Belastung standhalten zu können (beispielsweise Wandstärke einer Kunststoffflasche bzw. eines Kunststoffkanisters) . Der Vollständigkeit halber ist zu erwähnen, dass die vorgeschlagene Kunststoffverbindungsnaht bei einer Belastung in Nicht-Standardrichtung meist ähnliche Festigkeitseigenschaften wie herkömmliche Kunststoffverbindungsnähte aufweist. Da eine Belastung in Nicht-Standardrichtung jedoch eher seltener und/oder mit einer üblicherweise geringeren Krafteinwirkung erfolgt, kann jedoch auch eine gewisse "schwächere Ausführung" gegenüber bekannten Kunststoffverbindungsnähten toleriert werden. Möglich ist es im Übrigen auch, die Kunststoffverbindungsnaht beispielsweise abwechselnd und abschnittsweise mit einer unterschiedlichen Standard-Belastungsrichtung zu versehen, sodass im Endergebnis eine festigkeitsunterstützende Wirkung in mehreren (bis hin zu im Wesentlichen allen realistischerweise zu erwartenden) Richtungen realisiert werden kann. Weiterhin wird darauf hingewiesen, dass die "festigkeitsunterstützende" Wirkung der "festigkeitsunterstützenden Kunststoffverbindungsnaht" in aller Regel damit einhergeht, dass es bei entsprechender Belastung auch zu einer "dichtigkeitsunterstützenden" Wirkung der Kunststoffverbindungsnaht kommt. Es soll daher möglich sein zusätzlich oder alternativ zum Begriff "festigkeitsunterstützend" oder "festigkeitsunterstützende Kunststoffverbindungsnaht" auch den Begriff "dichtigkeitsunterstützend" bzw. "dichtigkeitsunterstützende Kunststoffverbindungsnaht" zu verwenden.

Insbesondere ist es vorgesehen, dass die festigkeitsunterstützende Kunststoffverbindungsnaht zumindest teilweise und/oder zumindest bereichsweise als Hintergreifeinrichtung zumindest eines Kunststoffwerkstückbereichs ausgebildet ist. (Es soll im Übrigen möglich sein, diese Definition anstelle und/oder zusätzlich zur vorgenannten Definition zur Definition der zu Grunde liegenden Erfindung verwenden zu können). Eine Hintergreifeinrichtung kann beispielsweise als eine Art Hakeneinrichtung (insbesondere auch mit einer gewissen Längserstreckung versehen), als U-förmiges, V-förmiges und/oder "einrollendes" Umbiegen eines Kunststoffwerkstückbereichs (insbesondere eines Kantenbereichs oder dergleichen) usw. realisiert werden. Mit einer derartigen Ausbildung kann die festigkeitsunterstützende Wirkung besonders einfach und auch verfahrenstechnisch leicht zu realisieren ausgestaltet werden.

Weiterhin wird vorgeschlagen, die Kunststoffverbindungsnaht derart auszuführen, dass sich in einer Mehrzahl von Belastungsrichtungen ihre Verbindungsfestigkeit erhöht, und insbesondere derart auszubilden, dass zumindest teilweise und/oder zumindest bereichsweise eine Mehrzahl von Kunststoffwerkstückbereichen, insbesondere zwei Kunststoffwerkstückbereiche, eine Hintergreifeinrichtung aufweisen. Mit einer derartigen Ausbildung kann die Kunststoffverbindungsnaht besonders universell verwendet werden. Insbesondere können dadurch auch "ungewöhnliche Belastungsrichtungen" abgedeckt werden (wie beispielsweise bei einer Kunststoffflasche ein (bereichsweise erfolgendes) Zusammendrücken eines Flaschenbereichs aufgrund eines Transports in einer Tasche und/oder aufgrund eines Umfallens oder Fallenlassens der Flasche). Hierdurch kann sich eine entsprechende Anwenderfreundlichkeit ergeben. Als besonders sinnvoll hat sich in diesem Zusammenhang eine Hintergreifeinrichtung erwiesen, bei der das Hintergreifen über einen Winkel von mehr als 180° erfolgt, insbesondere mehr als 210°, 240°, 270°, 300°, 330° oder 360°. Eine derartige Ausbildung ist insbesondere durch eine Art "Rollen", insbesondere ein "Zusammenrollen" der betreffenden Bereiche der Kunststoffverbindungsnaht realisierbar. Es ist darauf hinzuweisen, dass die Ausbildung der Kunststoffverbindungsnaht als festigkeitsunterstützende Kunststoffverbindungsnaht oftmals dazu führt, dass auch eine gewisse Verschiebungsstabilität der Kunststoffverbindungsnaht resultiert, wie insbesondere eine Stabilität gegenüber seitlicher Verschiebung. Dadurch ist es beispielsweise möglich, dass die Kunststoffverbindungsnaht eine erhöhte Druckfestigkeit aufweist (beispielsweise in Form eines Flächeauf-Fläche-Kontakts).

Von Vorteil ist es, wenn die Kunststoffverbindungsnaht derart ausgebildet ist, dass sie längs eines größeren Längenanteils, insbesondere im Wesentlichen längs ihrer Gesamtlänge als festigkeitsunterstützende Kunststoffverbindungsnaht ausgeführt ist. In einem derartigen Fall kann eine besonders große Festigkeit der Kunststoffverbindungsnaht realisiert werden. Gleichzeitig ist auch ein besonders großes, einheitliches Erscheinungsbild der Anordnung möglich. Schließlich ist es auch möglich, dass beispielsweise scharfe Kanten oder Vorsprünge durch Übergänge zwischen unterschiedlichen Nahtbereichen vermieden werden können. Dennoch kann es von Vorteil sein, wenn gewisse Längenanteile der Kunststoffverbindungsnaht nicht als festigkeitsunterstützende Kunststoffverbindungsnaht ausgeführt sind. Dies ist gegebenenfalls im Bereich von Knicks, engen Kurvenradien, Übergängen zwischen unterschiedlichen Werkstückbereichen und dergleichen vorteilhaft. In der Regel ist es sinnvoll, wenn zumindest 25 %, 50 %, 60 %, 70 %, 80 %, 90 %, 95 %, 96 %, 97 %, 98 % oder 99 % der Kunststoffverbindungsnaht-Länge als festigkeitsunterstützende Kunststoffverbindungsnaht ausgeführt sind. Die Angaben können sich dabei auf ein gesamtes Werkstück, bzw. auf eine "Kunststoffverbindungsnaht-Einheit" beziehen (beispielsweise auf die Kunststoffverbindungsnaht, die zur Ausbildung eines Durchbruchs oder eines Handgriffs vorgesehen ist), wohingegen andere Kunststoffverbindungsnaht-Bereiche gegebenenfalls "außen vor bleiben".

Weiterhin wird vorgeschlagen, bei der Kunststoffverbindungsnaht zumindest eine zumindest abschnittsweise vorgesehene zusätzliche Fluiddichtungseinrichtung vorzusehen. Hierbei kann es sich insbesondere um eine stoffschlüssige Naht, eine Schweißnaht, eine Klebstoffnaht und/oder eine durch Wirkvermittlung aushärtbare Klebstoffnaht handeln. Der Schweißvorgang kann beispielsweise durch Ultraschallschweißvorgang, Reibschweißvorgang und dergleichen erfolgen. Unter einer "durch Wirkvermittlung aushärtbaren Klebstoffnaht" kann beispielsweise ein Klebstoff verstanden werden, welcher unter (UV-) Lichteinwirkung (schnell) aushärtet. Hier ist gegebenenfalls sogar an einen Klebstoff zu denken, der nach Beaufschlagung mit einem (UV-) Blitzlichtimpuls (im Wesentlichen) ausgehärtet ist. Als Klebstoff können im Übrigen beliebige Klebstoffe verwendet werden, wie insbesondere einkomponentige Klebstoffe, durch Temperatur aushärtbare Klebstoffe (hier erweist sich eine erhöhte Temperatur des Kunststoffmaterials im Zuge eines Blasformverfahrens bzw. Streckblasformverfahrens gegebenenfalls als vorteilhaft) oder aber auch ein Zweikomponentenkleber. In diesem Zusammenhang ist es nicht nur möglich, dass ein Klebstoff erst nach der Ausbildung der eigentlichen festigkeitsunterstützenden Kunststoffverbindungsnaht im Bereich der festigkeitsunterstützenden Kunststoffverbindungsnaht aufgebracht wird. Zusätzlich oder alternativ ist es möglich, dass der Klebstoffauftrag noch vor der Ausbildung der festigkeitsunterstützenden Kunststoffverbindungsnaht in Form einer Beschichtung von (Teilen) zumindest eines der miteinander zu verbinden Kunststoffwerkstückbereiche erfolgt. Eine "Initiierung der Klebewirkung" bzw. Aushärtung des Klebstoffs kann nach Ausbildung der festigkeitsunterstützenden Kunststoffverbindungsnaht erfolgen, beispielsweise mittels UV-Strahlung oder aber auch durch Wärmeeinwirkung und dergleichen. Es ist darauf hinzuweisen, dass die Fluiddichtungseinrichtung die primäre Aufgabe hat, eine Dichtungswirkung hervorzurufen. Die mechanische Festigkeit der Kunststoffverbindungsnaht (zumindest ein größerer Anteil der Festigkeit der Kunststoffverbindungsnaht) wird dagegen durch die Ausbildung der Kunststoffverbindungsnaht als festigkeitsunterstützende Kunststoffverbindungsnaht realisiert. Aus diesem Grunde können vergleichsweise einfache, kostengünstige und schnell aushärtbare Materialien eingesetzt werden. Auch ist es nicht schädlich, wenn diese bis zum vollständigen Aushärten eine gewisse Zeit benötigen. Die Fluiddichtungseinrichtung kann insbesondere eine Fluiddichtigkeit und/oder eine Gasdichtigkeit unterstützen bzw. bewirken.

Weiterhin wird vorgeschlagen, dass die zumindest eine zusätzliche Fluiddichtungseinrichtung zumindest bereichsweise asymmetrisch, zwischenliegend und/oder randseitig angeordnet ist. Die Lageanordnung bezieht sich dabei insbesondere auf den Kontaktbereich der Kunststoffverbindungsnaht. Ein randseitiger Auftrag (beispielsweise ein Auftrag im Bereich einer Kante) kann prozesstechnisch besonders einfach erfolgen, da ein derartiger Bereich in der Regel besonders einfach zugänglich ist. Der Begriff "randseitig" (aber auch asymmetrisch und zwischenliegend) kann sich dabei auf unterschiedliche "Bezugssysteme" beziehen, wie insbesondere auf die fertig ausgebildete, festigkeitsunterstützende Kunststoffverbindungsnaht (also beispielsweise ein U-förmiges Profil oder ein eingerolltes Profil).

Erste Versuche haben gezeigt, dass es vorteilhaft ist, wenn bei der Kunststoffverbindungsnaht zumindest ein Kunststoffwerkstückbereich zumindest bereichsweise ein Kunststoffmaterial mit einer kurzen Kristallisationshalbwertszeit und/oder ein PET-Material aufweist bzw. im Wesentlichen aus einem derartigen Kunststoffmaterial gefertigt ist. In einem derartigen Fall können die besonderen Eigenschaften der vorgeschlagenen Kunststoffverbindungsnaht in besonderem Maße zur Geltung kommen. Insbesondere ist darauf hinzuweisen, dass es bei PET-Materialien bislang nicht bzw. kaum möglich war, Kunststoffverbindungsnähte mit wirtschaftlich vertretbarem Aufwand und/oder ausreichenden Stabilitäts- und Dichtigkeitseigenschaften zu realisieren. Anders formuliert, wird die Ausbildung mechanisch stabiler und/oder fluidisch dichter Kunststoffverbindungsnähte beim Vorliegen von Materialien mit einer kurzen Kristallisationshalbwertszeit bzw. bei PET-Materialien oftmals erst (sinnvoll) möglich.

Weiterhin wird ein Kunststoffformkörper vorgeschlagen, der zumindest eine Kunststoffverbindungsnaht gemäß der vorherigen Beschreibung aufweist. Der Kunststoffformkörper kann dann die gleichen Eigenschaften und Vorteile aufweisen (zumindest in Analogie), wie dies im Zusammenhang mit der Kunststoffverbindungsnaht bereits beschrieben wurde. Auch eine entsprechende Weiterbildung des Kunststoffformkörpers ist (zumindest in Analogie) ebenfalls möglich. Bei dem Kunststoffformkörper kann es sich insbesondere um eine Hohlraumeinrichtung und/oder eine Gefäßeinrichtung, speziell eine Flascheneinrichtung und/oder eine Kanistereinrichtung handeln. Derartige Kunststoffformkörper werden sowohl im industriellen als auch im häuslichen Umfeld genutzt. Insbesondere im häuslichen Umfeld werden diese nicht nur für Chemikalien (beispielsweise Reinigungsmittel), sondern auch oftmals für Lebensmittel (Wasser, Limonaden und sonstige Getränke, gegebenenfalls auch Festkörper wie Mehl, Reis, Frühstücksflocken, Pulver (insbesondere Getränkepulver wie beispielsweise Instant-Getränkepulver, Instant-Tee, Instant-Kakao) usw.) sowie für kosmetische Produkte (beispielsweise Parfüms, Shampoo, Badezusätze) bzw. für medizinische Produkte verwendet.

Vorteilhaft ist es, wenn es sich bei dem Kunststoffformkörper zumindest teilweise und/oder zumindest bereichsweise um einen blasgeformten Kunststoffkörper handelt. Unter "blasgeformt" sind auch Weiterbildungen des Blasformverfahrens mit umfasst, wie insbesondere das Streckblasformen, Extrusionsblasformen und Streckextrusionsblasformen. Dies stellt das Standard-Herstellungsverfahren für derartige Kunststoffformkörper dar. Eine entsprechende Ausbildung kann somit die Akzeptanz der vorliegenden Erfindung stark erhöhen. Insbesondere ist es möglich, dass beispielsweise Teile der Produktionskette in Form einer "drop-in-Lösung" ausgetauscht werden können, ohne dass andere Teile der Produktionskette angepasst werden müssen.

Insbesondere ist es in diesem Zusammenhang sinnvoll, wenn der Kunststoffformkörper aus einem vorzugsweise spritzgegossenen und/oder extrudierten Rohling gefertigt ist, insbesondere aus einem Standard-Rohling. Hierdurch kann die Akzeptanz des Kunststoffformkörpers nochmals erhöht werden. Unter einem "gegossenen Rohling" ist insbesondere ein spritzgussgeformter Rohling zu verstehen.

Insbesondere wird vorgeschlagen, dass der Kunststoffformkörper zumindest eine Durchbruchseinrichtung aufweist, welche insbesondere zur Ausbildung einer vorzugsweise hohlen Griffeinrichtung dient. Mit einer derartigen Griffeinrichtung kann der Kunststoffformkörper besser gehandhabt werden. Dies kann sowohl die Verwendung als auch den Transport des (befüllten) Kunststoffformkörpers erleichtern. Insbesondere bei größeren Volumina kann dies von Vorteil sein (ab beispielsweise ca. 2 l bzw. 2 kg). Wenn die Griffeinrichtung hohl ausgeführt ist, kann auch dieser Bereich des Kunststoffformkörpers der Aufnahme von Füllmaterial, wie beispielsweise Flüssigkeiten, dienen. Hierdurch kann Volumen (Stauraum, Transportvolumen) eingespart werden. Darüber hinaus ist eine derartige Ausbildung ästhetisch oftmals besonders vorteilhaft. Durchbrüche können aber auch zu anderweitigen Zwecken vorgesehen werden, wie beispielsweise auch zu Designzwecken, um eine besonders einprägsame Gestaltung des Kunststoffformkörpers zu ermöglichen. Auch kann an eine bessere Befestigung des Kunststoffformkörpers (beispielsweise ein Aufstecken auf Stangen oder dergleichen) gedacht werden.

Weiterhin wird eine Werkzeugeinrichtung zur Herstellung einer zumindest teilweise und/oder zumindest bereichsweise blasgeformten Gefäßeinrichtung mit einer Form zur Ausbildung der Gefäßeinrichtung und zumindest einer Kunststoffwerkstückbereichsumbiegeeinrichtung zur Herstellung einer fluiddichten, vorzugsweise gasdichten, Kunststoffverbindungsnaht zwischen zumindest zwei, zumindest bereichsweise flächenartig ausgebildeten Kunststoffwerkstückbereichen der Gefäßeinrichtung vorgeschlagen. Die Kunststoffwerkstückbereichsumbiegeeinrichtung ist Teil der Form und ausgebildet, die Kunststoffverbindungsnaht zumindest abschnittsweise als unter Belastung festigkeitsunterstützende Hintergreifeinrichtung auszubilden, derart, dass sich zumindest bei einer in einer Standard-Belastungsrichtung einwirkenden Belastung auf Zug ihre Verbindungsfestigkeit erhöht.

Weiterhin wird ein Verfahren zur Herstellung einer fluiddichten, vorzugsweise einer gasdichten Kunststoffverbindungsnaht unter Verwendung einer Werkzeugeinrichtung vorgeschlagen, welches folgende Schritte umfasst:
- Anordnung von zumindest zwei miteinander zu verbindenden Kunststoffwerkstückbereichen benachbart zueinander und
- Verformung von zumindest einem Teilbereich zumindest eines Kunststoffwerkstückbereichs derart, dass sich zumindest bereichsweise durch Ausbildung einer Hintergreifeinrichtung eine bei Belastung auf Zug festigkeitsunterstützende Kunststoffverbindungsnaht ergibt. Auch in diesem Zusammenhang können sich die bereits vorab beschriebenen Eigenschaften und Vorteile zumindest in analoger Weise ergeben. Ebenfalls ist eine Weiterbildung des Verfahrens im Sinne der vorherigen Beschreibung zumindest in Analogie möglich. Die Anordnung der miteinander zu verbindenden Kunststoffwerkstückbereiche kann beispielsweise durch Übereinanderlegen, durch Stoß-an-Stoß-Anordnung (vorzugsweise mit einem gewissen überlappenden Bereich), in einer stirnseitigen Anordnung mit zumindest einem umgebogenen bzw. abgeknickten Endfalz-Bereich oder dergleichen erfolgen. Ein eventuell vorhandener Überlappungsbereich ist dabei von seiner Größe her sinnvollerweise so gewählt, dass bei zumindest einem der Kunststoffwerkstückbereiche der betreffende Überlappungsbereich weitgehend bzw. im Wesentlichen vollständig für die Ausbildung der festigkeitsunterstützenden Kunststoffverbindungsnaht genutzt wird und außerhalb dieses Bereichs keine Überlappung mehr erfolgt (bzw. in diesen Bereichen kein Kunststoffmaterial mehr vorhanden ist). In einem solchen Fall kann das Kunststoffmaterial optimal genutzt werden, ohne dass unnötiger Materialverbrauch damit einherginge.

Insbesondere kann es sich als sinnvoll erweisen, wenn bei dem vorgeschlagenen Verfahren zumindest zwei miteinander zu verbindende Kunststoffwerkstückbereiche zumindest teilweise übereinanderliegend angeordnet werden und/oder zumindest bereichsweise zumindest im Wesentlichen mit ihren randseitigen Kanten zueinander ausgerichtet sind. Eine derartige Durchführung des Verfahrens kann prozesstechnisch besonders einfach gehandhabt werden. Dementsprechend kann auch das zur Durchführung eines derartigen Verfahrens genutzte Werkzeug vergleichsweise einfach ausgeführt sein. Die Ausrichtung der zwei miteinander zu verbindenden Kunststoffwerkstückbereiche zueinander bzw. hinsichtlich ihrer randseitigen Kanten zueinander kann sowohl durch entsprechende Positionierung der betreffenden Bereiche zueinander realisiert werden. Möglich ist aber eine anfängliche "Grobausrichtung", wobei anschließend eine "Feinausrichtung" der betreffenden Teile einander gegenüber beispielsweise durch einen Schnittvorgang, Ablängungsvorgang, Stanzvorgang oder dergleichen realisiert wird.

Möglich ist es insbesondere, das Verfahren derart durchzuführen, dass zumindest bereichsweise zumindest zwei Kunststoffwerkstückbereiche zur Ausbildung zumindest einer festigkeitsunterstützenden Kunststoffverbindungsnaht verformt werden. Einerseits kann durch die Verformung von zwei Kunststoffwerkstückbereichen in der Regel die Stabilität der betreffenden Kunststoffverbindungsnaht erhöht werden und/oder die festigkeitsunterstützende Wirkung der Kunststoffverbindungsnaht für mehrere Richtungen realisiert werden. Ebenso kann es sich aber auch derart verhalten, dass durch eine derartige Ausbildung der Verformungsvorgang besonders einfach gestaltet werden kann (und dementsprechend das genutzte Werkzeug entsprechend einfach ausgeführt werden kann). Insbesondere ist es möglich, dass die betreffenden Kunststoffwerkstückbereiche "zweilagig aufeinander gelegt werden", und anschließend als Einheit verformt, wie beispielsweise geknickt, gerollt oder umgebogen werden.

Weiterhin wird vorgeschlagen, das Verfahren derart durchzuführen, dass zumindest ein Kunststoffwerkstückbereich durch einen Verformungsvorgang unter zumindest teilweiser Verwendung von einem Blasverformungsvorgang und/oder einem Verformungsvorgang durch Veränderung von zumindest Teilbereichen zumindest einer Werkzeugeinrichtung verformt wird. Ein derartiges Verfahren hat sich als produktionstechnisch besonders sinnvoll erwiesen und ist von seinem Grundsatz her im Stand der Technik bekannt. Insbesondere können beispielsweise mechanisch bewegliche Stempel genutzt werden, so wie diese in EP 2 103 413 B1, EP 2 292 401 B1 oder EP 1 853 416 B1 beschrieben sind.

Insbesondere kann das Verfahren derart durchgeführt werden, dass zumindest ein Kunststoffwerkstückbereich einem Ablängungsvorgang unterzogen wird. Dieser Ablängungsvorgang kann sowohl vor der Ausbildung einer festigkeitsunterstützenden Kunststoffverbindungsnaht durchgeführt werden (was bevorzugt ist), um unnötige und für die anschließenden Verformungsvorgänge gegebenenfalls sogar hinderliche Materialüberstände zu beseitigen, aber auch erst nach Ausbildung einer festigkeitsunterstützenden Kunststoffverbindungsnaht (beispielsweise um eine gebildete Trennwand auszustanzen), um damit einen Durchbruch im Gefäßkörper (oder sonstigen Werksstücckörpern) zu realisieren.

Schließlich wird noch eine Werkzeugeinrichtung zur Herstellung einer Kunststoffverbindungsnaht vom vorab beschriebenen Typ und/oder zur Herstellung eines Kunststoffformkörpers vom vorab beschriebenen Typ und/oder zur Durchführung eines Verfahrens vom vorab beschriebenen Typ vorgeschlagen, welche zumindest eine Kunststoffwerkstückbereichsumbiegeeinrichtung aufweist. Mit einer derartigen Kunststoffwerkstückbereichsumbiegeeinrichtung ist es auf besonders einfache Weise möglich, eine insbesondere als Hintergreifeinrichtung ausgebildete festigkeitsunterstützende Kunststoffverbindungsnaht zu realisieren. Die Kunststoffwerkstückbereichsumbiegeeinrichtung kann beispielsweise als eine Art "U-förmige Nut" (mit abgerundetem Boden) realisiert werden, die parallel zur ebenen Fläche der miteinander zu verbindenden Kunststoffwerkstückbereiche und/oder parallel zur Kantenrichtung der miteinander zu verbindenden Kunststoffwerkstückbereiche liegt. Die Bewegung kann beispielsweise in Form eines transversal verschieblichen Stempels durchgeführt werden. Dieser kann Teil einer insbesondere ansonsten unbeweglichen (Hohlraum)Form sein. Vorteilhaft ist es, wenn die Werkzeugeinrichtung, insbesondere zumindest Teile hiervon, wie insbesondere die Kunststoffwerkstückbereichsumbiegeeinrichtung, beheizt sind, um auf diese Weise das Kunststoffmaterial in einem optimalen Temperaturbereich zu belassen (insbesondere kann eine erhöhte Steifigkeit durch Abkühlvorgänge wirksam vermieden werden).

Insbesondere ist es möglich, die zumindest eine Kunststoffwerkstückbereichsumbiegeeinrichtung beweglich anzuordnen, insbesondere beweglich relativ zu anderen Teilbereichen der Werkzeugeinrichtung. Hierdurch kann ein Verformungsvorgang der zu verformenden Teile besonders einfache realisiert werden, ohne dass andere Teile des zu fertigenden Werkstücks notwendigerweise mit beeinflusst werden müssen. Insbesondere kann der betreffende Teil der Werkzeugeinrichtung auch zusätzliche Aufgaben (wie beispielsweise einen Schneidevorgang) realisieren. Die betreffenden Teile der Werkzeugeinrichtung können insbesondere als eine Art von beweglichen Stempeln oder dergleichen ausgebildet werden.

Vorteilhaft ist es insbesondere, wenn bei der Werkzeugeinrichtung eine Ablängungseinrichtung vorgesehen ist, welche bevorzugt integral mit zumindest einer Kunststoffwerkstückbereichsumbiegeeinrichtung ausgebildet ist. Auf diese Weise können die betreffenden, miteinander zu verbindenden Kunststoffwerkstückbereiche besonders vorteilhaft präpariert werden, bevor diese miteinander verbunden werden. Hierdurch kann in der Regel die Festigkeit und/oder Dichtigkeit der resultierenden Kunststoffverbindungsnaht besonders groß sein. Insbesondere kann es möglich werden, allfälligen Ausschuss weitestgehend zu minimieren.

Schließlich wird vorgeschlagen, die Werkzeugeinrichtung mit zumindest einer Klebstoffaufbringungseinrichtung zu versehen. Mithilfe des Klebstoffs kann einerseits die Festigkeit der resultierenden Kunststoffverbindungsnaht erhöht werden, andererseits kann aber auch zusätzlich oder alternativ die Dichtigkeit (insbesondere Fluiddichtigkeit und/oder Gasdichtigkeit) der betreffenden Kunststoffverbindungsnaht erhöht werden. Dies ist für viele Einsatzgebiete vorteilhaft, wenn nicht sogar (im Wesentlichen) unabdingbar. Der Klebstoff kann dabei vor der Positionierung der betreffenden Kunststoffwerkstückbereiche relativ gegeneinander aufgetragen werden, während einer "Präparierung" der betreffenden miteinander zu verbindenden Flächenbereiche zur Ausbildung einer Kunststoffverbindungsnaht bzw. nach Ausbildung der festigkeitsunterstützende Kunststoffverbindungsnaht.

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
- Fig. 1a-1h: unterschiedliche Ausführungsweisen einer selbstfestigenden Kunststoffverbindungsnaht, jeweils in einem schematischen Querschnitt;
- Fig. 2a-2f: ein mögliches Verfahren zur Ausbildung von Griffmulden für eine PET-Flasche aus einem PET-Rohling durch ein Streckblasverfahren, visualisiert durch zeitlich aufeinanderfolgende, schematische, perspektivische Ansichten;
- Fig. 3a-3c, 3e-3g: ein Verfahren zur Ausbildung einer Grifföffnung bei einer PET-Flasche, visualisiert durch zeitlich aufeinanderfolgende, schematische, perspektivische Querschnittsansichten des Griffbereichs einer PET-Flasche;
- Fig. 4b-4g: das Verfahren sowie ein zur Durchführung des Verfahrens geeignetes Werkzeug zur Ausbildung von selbstfestigenden Kunststoffnähten, visualisiert durch zeitlich aufeinander abfolgende, schematische Querschnittsdarstellungen des Nahtbereichs einer Kunststoffflasche.

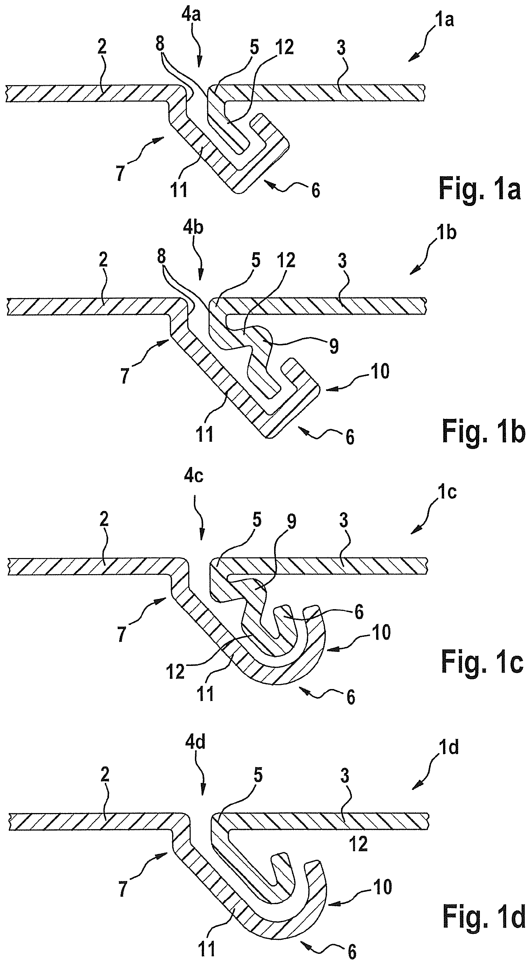

In Fig. 1a-1h sind unterschiedliche Ausführungsformen von selbstfestigenden Kunststoffverbindungsnähten 1a, 1b, 1c, 1d, 1e, 1f, 1g, 1h (festigkeitsunterstützenden Kunststoffverbindungsnähten), jeweils in einem schematischen Querschnitt dargestellt.

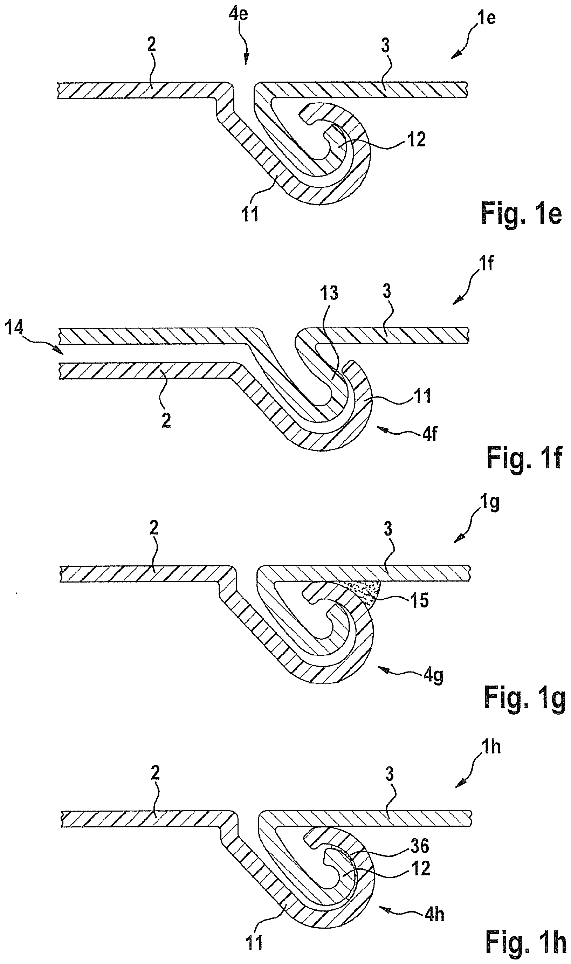

In den schematischen Zeichnungen von Fig. 1a-1h soll primär die mechanische Stabilität der Kunststoffverbindungsnähte erläutert werden. Mit anderen Worten geht es um die festigkeitsunterstützende/selbstfestigende Eigenschaft der Kunststoffverbindungsnähte bei einer Belastung in unterschiedlichen Richtungen. Zur Verdeutlichung des Sachverhalts ist daher zwischen den beiden Kunststoffplatten 2, 3 der jeweiligen Kunststoffverbindungsnaht ein Spalt eingezeichnet. Dies hätte natürlich zur Folge, dass die jeweilige Kunststoffverbindungsnaht in aller Regel nicht flüssigkeitsdicht, fluiddicht und/oder gasdicht wäre. In der Realität sind jedoch die aufeinanderliegenden Oberflächenbereiche der beiden Kunststoffplatten 2, 3 in einem gewissen Ausmaß innig miteinander oberflächenverpresst. Dies führt (abgesehen von einem gewissen, nie ganz zu vermeidenden Ausschuss) zu einer (initialen) Flüssigkeitsdichtigkeit, Fluiddichtigkeit bzw. Gasdichtigkeit. Die jeweilige Dichtigkeit kann im Übrigen noch durch zusätzliche Dichtungsmaterialien 15 (in Fig. 1g dargestellt) erhöht werden, was im Folgenden noch weiter beschrieben wird.

In Fig. 1a ist ein erstes mögliches Ausführungsbeispiel einer Kunststoffverbindungsnaht 1a dargestellt. Bei der Kunststoffverbindungsnaht 1a werden zwei Kunststoffplatten 2, 3 in einem Nahtbereich 4a miteinander verbunden. Beim Ausführungsbeispiel gemäß Fig. 1a, ist die in der Zeichnung rechte Kunststoffplatte 3 mit einer hakenartigen Abknickung 5 versehen. Der Endbereich, der in der Figur linken Kunststoffplatte 2 weist ebenfalls eine Abknickung 7 auf, die jedoch an ihrem Ende mit einer U-förmig gestalteten Umbiegung 6 versehen ist, die die hakenartige Abknickung 5 der rechten Kunststoffplatte 3 sowohl umgreift als auch hintergreift.

Wie man in Fig. 1a leicht erkennen kann, ist die Kunststoffverbindungsnaht 1a sowohl auf Zug, als auch bis zu einem gewissen Ausmaß auf Druck belastbar, ohne dass die beiden Kunststoffplatten 2, 3 (fest) miteinander verklebt sein müssten. Bei einer Belastung in Druckrichtung stoßen nämlich die Stirnseiten 8 der Kunststoffplatten 2, 3 gegeneinander und unterbinden eine weitere Bewegung. Die Größe der Belastbarkeit auf Druck hängt dabei insbesondere von der Größe der Stirnseiten 8, sowie von der Dicke der Kunststoffplatten 2, 3 ab. Sind beispielsweise die Stirnseiten 8 vergleichsweise klein ausgeführt, so kann es bereits bei einer nicht übermäßig großen Druckbelastung zu einem "seitlichen Abrutschen" der beiden Stirnseiten 8 gegeneinander kommen. Dies gilt insbesondere, da die "Abbiegebereiche" der jeweiligen Wände in der Realität gewisse "Rundungsbereiche" aufweisen. Werden die Kunststoffplatten 2, 3 dagegen in Zugrichtung auseinander gezogen, so führt die Kombination aus U-förmigem Hintergreifbereich 6 und hakenartiger Abknickung 5 zu einer Verriegelung der beiden Kunststoffplatten 2, 3, derart, dass eine weitere Zugbewegung unterbunden wird.

Der Begriff "Kunststoffplatte" ist im Übrigen breit auszulegen. Durch die Verwendung des Begriffs "Platte" soll verdeutlicht werden, dass es sich um ein Element handelt, das eine vergleichsweise große Oberflächenerstreckung und demgegenüber eine relativ geringe Dicke aufweist. Darüber hinaus soll durch die Verwendung des Begriffs "Platte" (im Gegensatz beispielsweise zu einer "Folie") darauf hingewiesen werden, dass die betreffenden Kunststoffplatten 2, 3 eine gewisse Eigensteifigkeit und/oder Festigkeit (insbesondere auch eine Festigkeit bei einer Druckbelastung) aufweisen müssen. Die jeweilige Steifigkeit/Festigkeit hängt dabei vom jeweiligen Einsatzzweck ab.

In Fig. 1b ist ein weiteres mögliches Ausführungsbeispiel für eine Kunststoffverbindungsnaht 1b dargestellt. Die vorliegende Kunststoffverbindungsnaht 1b ähnelt in weiten Bereichen der in Fig. 1a dargestellten Kunststoffverbindungsnaht 1a und umfasst einen Nahtbereich 4b. In Abweichung hiervon ist jedoch bei der in der Fig. rechts liegenden Kunststoffplatte 3 im Bereich der Abknickung 5 zusätzlich eine in Längsrichtung verlaufende Sicke 9 zu erkennen. Die Sicke 9 kann dabei eine Mehrzahl von in der Regel vorteilhaften Eigenschaften realisieren. Zum einen ist es hierdurch möglich, dass eine gewisse "elastische Federwirkung" bei einer Belastung auf Zug (aber auch auf Druck) realisiert werden kann. Dies kann sich deshalb als besonders vorteilhaft erweisen, weil es hierdurch möglich ist, dass beispielsweise die direkte Verschweißung der beiden Kunststoffplatten 2, 3 in einem Kopfbereich 10 der Kunststoffverbindungsnaht 1b etwaige kurzzeitig einwirkende Belastungen nicht (vollständig) aufnehmen muss. Derartige, kurzzeitig einwirkende Belastungen können beispielsweise entstehen, wenn die Flasche fallen gelassen wird bzw. hart auf einer Ablage abgestellt wird. Die "Federwirkung" durch die Sicke 9 ist in der Regel besonders vorteilhaft, weil die unmittelbare Verbindung zwischen den Kunststoffplatten 2, 3 in der Regel vergleichsweise spröde ist. Selbstverständlich ist es auch möglich, dass auch andere Oberflächen der Kunststoffplatten 2, 3 zusätzlich oder alternativ unmittelbar miteinander verbunden sind und nicht nur diejenigen im Kopfbereich 10 der Kunststoffverbindungsnaht 1b.

Ein weiterer Vorteil der Sicke 9 ist, dass das freie Ende der U-förmigen Umbiegung 6 eine "direkte Abstützfläche" in Form einer Flanke der Sicke 9 hat. Hierdurch kann sich die mechanische Stabilität der Kunststoffverbindungsnaht 1b, insbesondere bei einer Belastung auf Zug, erhöhen.

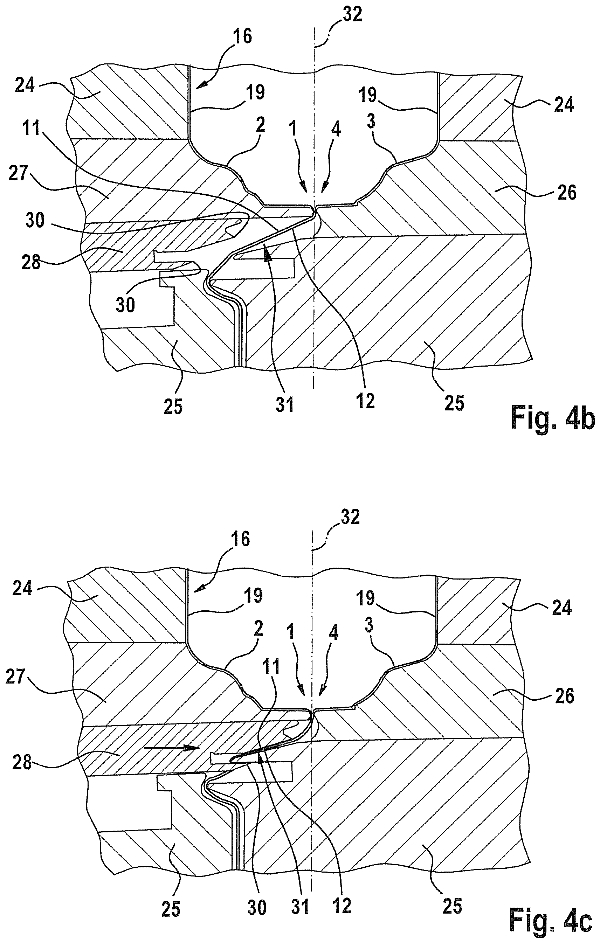

Ein weiterer Vorteil der Sicke 9 liegt produktionstechnisch begründet. Durch die Sicke 9 ist es nämlich möglich, dass ein möglicherweise vorhandener "Längenüberschuss" des hakenartigen Abknickbereichs 5 der rechten Kunststoffplatte 3 vorteilhaft von der Sicke 9 "aufgenommen" werden kann. Dadurch ist es beispielsweise möglich, die beiden Abknickbereiche 7, 5 der beiden Kunststoffplatten 2, 3 durch ein einheitliches Schneidwerkzeug abzulängen und dennoch auf einfache Weise eine selbstverriegelnde Verbindungsnaht 1b zu realisieren. Dies wird insbesondere in der folgenden Beschreibung und unter Bezugnahme auf Fig. 4b-4g noch näher erläutert werden.

In Fig. 1c ist eine weitere Modifikation einer Kunststoffverbindungsnaht 1c mit einem Nahtbereich 4c dargestellt. In Weiterbildung der in den Figs. 1a und 1b dargestellten Kunststoffverbindungsnähte 1a, 1b ist bei der in Fig. 1c dargestellten Verbindungsnaht 1c im Kopfbereich 10 der Verbindungsnaht 1c nicht nur bei der linken Platte 2, sondern auch bei der rechten Platte 3 eine U-förmige Umbiegung 6 vorgesehen. Die beiden U-förmigen Umbiegungen 6 sind dabei formkomplementär zueinander ausgebildet. Ein großer Vorteil bei einer derartigen Ausführung der Kunststoffverbindungsnaht 1c besteht darin, dass ein großer, flächiger Kontakt zwischen den beiden Oberflächen der Kunststoffplatten 2, 3 im Kopfbereich 10 vorhanden ist. Hierdurch kann in der Regel die Dichtigkeit der Verbindungsnaht 1c erhöht werden, aber auch gegebenenfalls die (mechanische) Festigkeit der Kunststoffverbindungsnaht 1c. Da vom U-förmigen Umbiegungsbereich der rechten Kunststoffplatte 3 eine gewisse Länge des Abknickbereichs 5 aufgenommen wird, ist die Sicke 9 in aller Regel kleiner, als dies bei der in Fig. 1b gezeigten Kunststoffverbindungsnaht 1b der Fall ist.

Je nach den vorliegenden Dimensionen ist es im Übrigen auch möglich, dass die Sicke 9 vollständig entfallen kann, sodass sich das in Fig. 1d gezeigte Ausführungsbeispiel einer Kunststoffverbindungsnaht 1d mit einem Nahtbereich 4d ergeben kann.

Eine weitere vorteilhafte Ausbildungsform einer Kunststoffverbindungsnaht 1e kann sich ergeben, wenn die beiden Laschenbereiche 11, 12 noch weiter gegeneinander verdreht werden, sodass sich eine Art Einrollung ergibt (Fig. 1e). Hierdurch kann einerseits der Oberflächenkontaktbereich der beiden Kunststoffplatten 2, 3 im Nahtbereich 4e erhöht werden, was entsprechende Vorteile hinsichtlich der (mechanischen) Festigkeit sowie der Dichtigkeit der Kunststoffverbindungsnaht 1e zur Folge haben kann. Ein weiterer Vorteil ist jedoch auch, dass sich eine noch weitergehende mechanische Stabilisierung in Bezug auf unterschiedlich gerichtete, auf die Kunststoffverbindungsnaht 1e einwirkende Kräfte ergeben kann. Insbesondere ist die in Fig. 1e dargestellte Kunststoffverbindungsnaht auch vergleichsweise unempfindlich gegenüber Scherkräften. Dies ist in aller Regel entsprechend vorteilhaft.

In Fig. 1f ist ein weiteres Beispiel einer Kunststoffverbindungsnaht 1f dargestellt. Bei dieser ist die "rechte" Kunststoffplatte 3 durchgängig ausgebildet, wohingegen die "linke" Kunststoffplatte 2 im Nahtbereich 4f endet. Wie man Fig. 1f entnehmen kann, ist im Nahtbereich 4f bei der "rechten" Kunststoffplatte 3 (die durchgängig ausgeführt ist) ein nasenartiger Vorsprung 13 durch eine Verformung der Kunststoffplatte 3 ausgebildet. Diese nasenartige Verformung 13 dient als "Haltepunkt" für den Laschenbereich 11 der linken Kunststoffplatte 2. Auf diese Weise ist beispielsweise eine besonders lange Dichtungslänge realisierbar (wobei beispielsweise die Doppellage 14 aus beiden Kunststoffplatten 2, 3 durch Schweißverfahren (beispielsweise Reibschweißen), vorgewärmte Stempel oder dergleichen miteinander verbunden werden kann). Der doppellagige Bereich 14 kann dabei eine im Wesentlichen beliebige Länge aufweisen und beispielsweise im Bereich von 1 cm oder noch größer sein. Ein weiterer Vorteil des doppellagigen Bereichs 14 ist, dass hierdurch die mechanische Stabilität des betreffenden Bereichs nochmals erhöht werden kann, was insbesondere für einen Handgriffbereich einen Vorteil darstellen kann. Auch kann der eigentliche Nahtbereich 4f aus einem für einen Benutzer "unbequemen Bereich" heraus verschoben werden, sodass ein Tragen der resultierenden Kunststoffflasche bequemer gestaltet werden kann.

In Fig. 1g ist eine weitere Modifikation einer Kunststoffverbindungsnaht 1g dargestellt. Der Nahtbereich 4g ist im vorliegend dargestellten Ausführungsbeispiel im Wesentlichen identisch zum Nahtbereich 4f der in Fig. 1e dargestellten Kunststoffverbindungsnaht 1e gestaltet. Im Unterschied zu dieser ist jedoch in einem Bereich des Nahtbereichs 4g seitlich ein zusätzlicher Klebstoff 15 aufgetragen. Bei diesem Klebstoff 15 kann es sich beispielsweise um einen schnell aushärtenden Klebstoff handeln und/oder um einen wirkvermittelt aushärtbaren Klebstoff 15, der unter Einwirkung eines äußeren "Impulses" aushärtet. Ein Beispiel hierfür ist ein UV-aushärtbarer Kunststoff. Dieser kann beispielsweise (initial) durch eine UV-Lampe (Einwirkzeit beispielsweise von 1 s bei entsprechender Stärke der Lampe) oder aber auch unter Einfluss eines UV-Blitzlichts ausgehärtet werden. Selbstverständlich ist es möglich, den Klebstoff 15 auch in Kombination mit sämtlichen anderen dargestellten (sowie weiteren, vorliegend nicht explizit dargestellten Abwandlungen von) Kunststoffverbindungsnähten vorzusehen.

In Fig. 1h ist noch eine weitere Modifikation einer Kunststoffverbindungsnaht 1h dargestellt. Ähnlich zum in Fig. 1g dargestellten Ausführungsbeispiel wird auch hier zur Realisierung einer zusätzlichen Dichtigkeit und Festigkeit der Verbindungsnaht 1h ein Klebstoffmaterial verwendet. Der Klebstoff ist jedoch in Form einer Klebstoffschicht 36 vorgesehen, die bereits vor der Ausbildung des eigentlichen Nahtbereichs 4h im Bereich der Lasche 11 der linken Kunststoffplatte 2 aufgebracht wurde. Nach Ausbildung des Nahtbereichs 4h liegen die entsprechenden Bereiche der beiden Kunststoffplatten 2, 3 unter "Zwischenlage" der Klebstoffschicht 36 aufeinander. Durch Einbringung eines äußeren "Impulses" (beispielsweise analog zum Ausführungsbeispiel gemäß Fig. 1h mittels UV-Licht; denkbar sind jedoch auch andere Energieeinträge, wie beispielsweise ein Wärmeeintrag, insbesondere mittels einer IR-Lampe) wird die Klebstoffschicht 36 "aktiviert" und vorzugsweise gleichzeitig (im Wesentlichen) ausgehärtet.

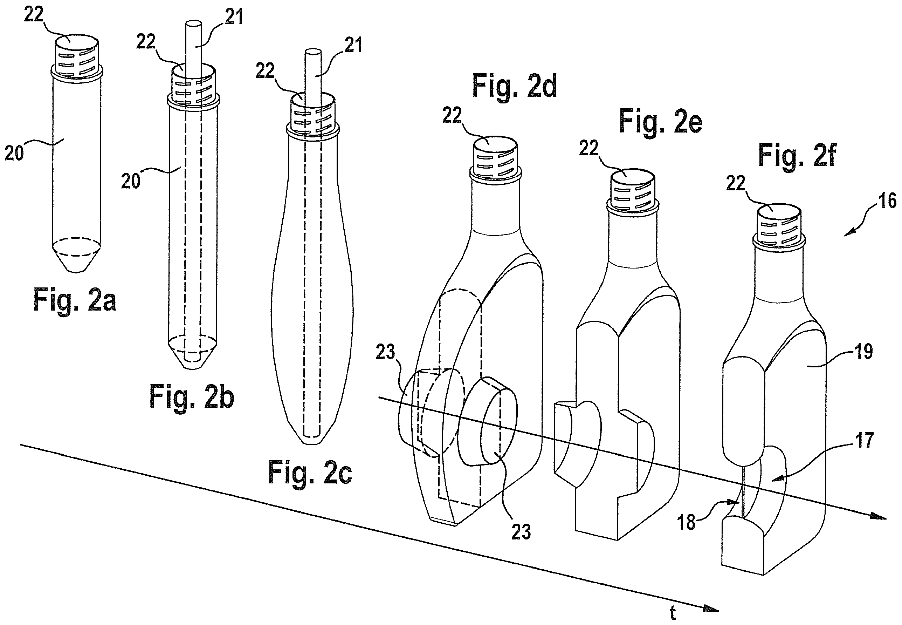

In Fig. 2a-2f ist ein an sich bekanntes Verfahren zur Herstellung einer PET-Flasche 16 mit Griffmulde 17 dargestellt. Dieses Verfahren ist beispielsweise in EP 2 103 413 B1 beschrieben. Bei der Griffmulde 17 der PET-Flasche 16 handelt es sich um eine nicht-durchgängige Griffmulde 17, das heißt, dass die Flaschenwand 19 im Bereich der Griffmulde 17 durchgängig ist, sodass sich eine doppellagige Wand 18 im Bereich der Griffmulde 17 ergibt. Die in Fig. 2a-2f ganz rechts dargestellte PET-Flasche 16 ist eine geeignete "Start-Flasche" für die Ausbildung eines echten, durchgängigen Handgriffs, so, wie dies im Folgenden noch näher erläutert wird.

Es wird jedoch darauf hingewiesen, dass selbstverständlich auch andere PET-Flaschen (auch Flaschen aus einem anderen Kunststoffmaterial) als Ausgangsbasis für die Ausbildung eines Handgriffs dienen können. Ebenso ist es möglich, dass die in Fig. 2a-2f dargestellte PET-Flasche 16 auf eine andere Weise gefertigt wird.

In Fig. 2a-2f wird die PET-Flasche 16 in Form von mehreren, in Fig. 2a-2f schematisch dargestellten Verfahrensschritten aus einem Standard-PET-Rohling 20 mittels eines Streckblasverfahrens gefertigt. Dabei sind in Fig. 2a-2f zeitlich aufeinander abfolgende Produktionsschritte (längs der Zeitachse t) dargestellt. Die letzten beiden Teilfiguren Fig. 2e und Fig. 2f sind darüber hinaus im Bereich der Griffmulde 17 mit einer Querschnittsdarstellung versehen. Beim PET-Rohling 20 handelt es sich um einen üblichen, kommerziell erhältlichen, im Wesentlichen rotationssymmetrischen PET-Rohling. Dieser weist also insbesondere keine "vorbereitenden Maßnahmen" für die Ausbildung eines Handgriffs auf, wie beispielsweise einen angeformten Kunststoffvorsprung und/oder eine Kunststoffverdickung in lediglich einem Teilbereich der Umfangswandung.

Zunächst wird der PET-Rohling 20 auf eine thermoplastische Temperatur vorgewärmt (bei PET üblicherweise im Bereich von 95 °C, was wenige Grad Celsius oberhalb der Glasübergangstemperatur liegt) und zunächst mit einem Streckdorn 21 gestreckt, der in die Schraubverschlussöffnung 22 des PET-Rohlings 20 (und spätere Kunststoffflasche 16) eingeführt wird. Anschließend wird - ebenfalls über die Schraubverschlussöffnung 22 - Druckluft in den PET-Rohling 20 eingeblasen (Fig. 2c), sodass sich dieser aufbläht. Dieses Aufblasen wird in einer Blasform 24 durchgeführt, sodass die Kunststoffwände 19 an die Wände der Blasform 24 gedrückt werden und sich die Flaschenform der zu fertigenden PET-Flasche 16 ergibt.

Im vorliegend dargestellten Ausführungsbeispiel wird die Griffmulde 17 zunächst durch die Ausbildung von "Fischaugen" 23, die nach außen aus dem Flaschenkörper hervorspringen, vorbereitet. Hierdurch wird eine Vordehnung (und entsprechende Verdünnung der Kunststoffwand 19 in diesem Bereich) erzielt. Produktionstechnisch kann dies durch bewegliche Stempel realisiert werden (siehe auch die bereits erwähnte EP 2 103 413 B1). Hernach werden die bei den Verfahrensschritten 2d und 2e noch zurückgezogenen Stempel aufeinander zu bewegt, sodass sich nun die Griffmulde 17 ausbildet. Darüber hinaus werden die (vorerhitzten) Stempel mit einer gewissen Kraft aneinandergepresst, sodass dementsprechend die beiden Kunststoffwände 19 der doppellagigen Wand 18 zum Teil stoffschlüssig miteinander verbunden werden.

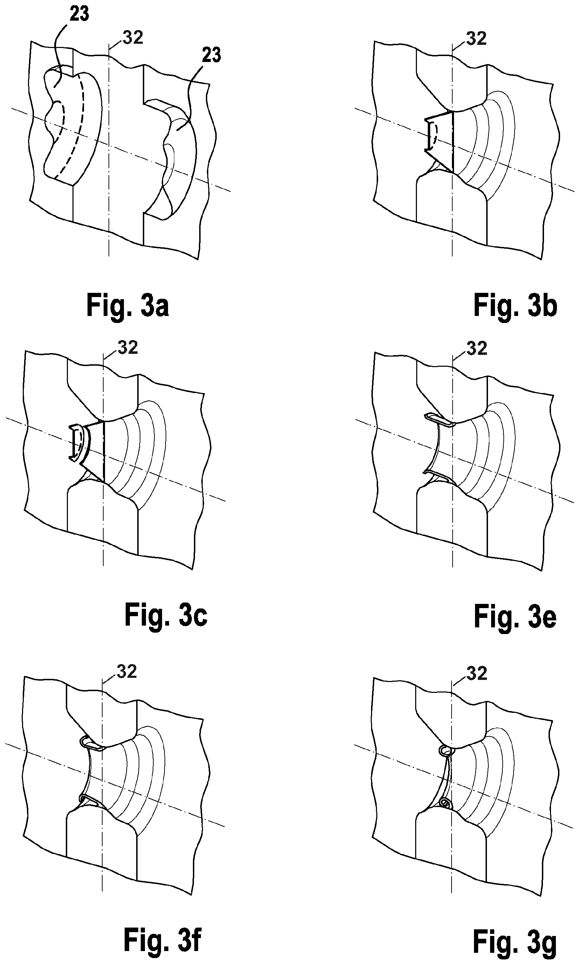

In den Figs. 3a-3c, 3e-3g und 4b-4g ist ein mögliches Verfahren sowie ein Ausführungsbeispiel für ein Werkzeug zur Durchführung desselben, in Form mehrerer zeitlich hintereinander abfolgender Situationen illustriert. In Fig. 4b-4g ist dabei eine Querschnittsansicht des (auszubildenden) Nahtbereichs 4 einer Kunststoffverbindungsnaht 1 in unterschiedlichen Verfahrensschritten im schematischen Querschnitt dargestellt. Der in Fig. 4b-4g dargestellte Bereich entspricht einem Teilbereich einer Griffmulde 17, so, wie dies beispielsweise in Fig. 2f zu sehen ist. Weiterhin sind in Fig. 4b-4g Teile der Werkzeuge, die zur Fertigung der "in Produktion befindlichen" PET-Flasche dienen, im schematischen Querschnitt zu sehen. Fig. 3a-3c, 3e-3g zeigt dabei die jeweiligen Produktionsphasen.

Ferner ist sowohl in Fig. 3a-3c, 3e-3g als auch in Fig. 4b-4g eine ein Mittellinie 32 eingezeichnet. Die resultierende Kunststoffflasche 16 weist eine annähernde Spiegelsymmetrie entlang dieser Ebene auf.

In Figs. 3a und 4b wird als Ausgangssituation für die Ausbildung des mit einer durchgehenden Öffnung versehenen Handgriffs die "Fischaugen-Konfiguration" gewählt, so wie sie auch in Figs. 2d und 2e zu erkennen ist. Wie bereits erwähnt, kann selbstverständlich auch eine andere Ausgangskonfiguration gewählt werden. In einem solchen Fall sind gegebenenfalls gewisse Anpassungen des Verfahrensablaufs und/oder des Werkzeugs durchzuführen.

In Figs. 3a und 4b sind die Kunststoffwände 19 der zu fertigenden Flaschen im Bereich der Griffmulde 17 zu sehen. Der Blasform-Grundkörper 24 definiert die (wesentliche) Formgebung der PET-Flasche. Die Muldenstempel 25, der Ambossstempel 26, der Andruckstempel 27 sowie der kombinierte Roll-/Schneidstempel 28 befinden sich in einer äußeren Position, sodass ein entsprechender Hohlraum definiert wird, in den hinein die Fischaugen 23 drängen.

Im nächsten Schritt werden die Muldenstempel 25 sowie der Ambossstempel 26 mit dem dazu korrespondierenden Andruckstempel 27 aufeinander zu bewegt. Hierdurch werden die Wandbereiche 19 der beiden Fischaugen 23 aufeinander zu bewegt, sodass diese schlussendlich aufeinander zu liegen kommen (Fig. 3b und 4b). Der doppellagige Bereich der beiden Kunststoffbahnen verläuft jedoch nicht geradlinig (so, wie dies beim doppellagigen Wandbereich 18 in Fig. 2f der Fall ist). Vielmehr erfolgt die Schließbewegung der beiden Muldenstempel 25 einerseits und von Ambossstempel 26 und Andruckstempel 27 andererseits derartig zueinander versetzt, dass sich ein "schrägstehender", doppellagiger Bereich 31 im Bereich des Roll-/Schneidstempels 28 ergibt. Dies ist sinnvoll, um Laschen 11, 12 (vergleiche Fig. 1a-1h) geeigneter Länge zu erhalten, was im Folgenden näher erläutert wird.

Im nächsten Verfahrensschritt gemäß Figs. 3c und 4c wird der Roll-/Schneidstempel 28 nach vorne geschoben. Dies hat zur Folge, dass die Klinge 30 die doppellagige Wand 31 entlang der Klingenkante durchtrennt. Dadurch werden im Nahtbereich 4 der Kunststoffverbindungsnaht 1 Laschen 11, 12 geeigneter Länge ausgebildet. Darüber hinaus werden die beiden Laschen 11, 12 aufeinander gepresst, sodass es in diesem Bereich zu einer ersten, innigen, stoffschlüssigen Verbindung der beiden Wandbereiche 19 der Kunststoffflasche 16 kommt. Um eine ausreichende (Fluid-)Dichtigkeit zwischen den beiden Laschen 11, 12 zu erzielen, verharrt das Formwerkzeug vorzugsweise eine gewisse Zeit in der in den Figs. 3c und 4c gezeigten Position.

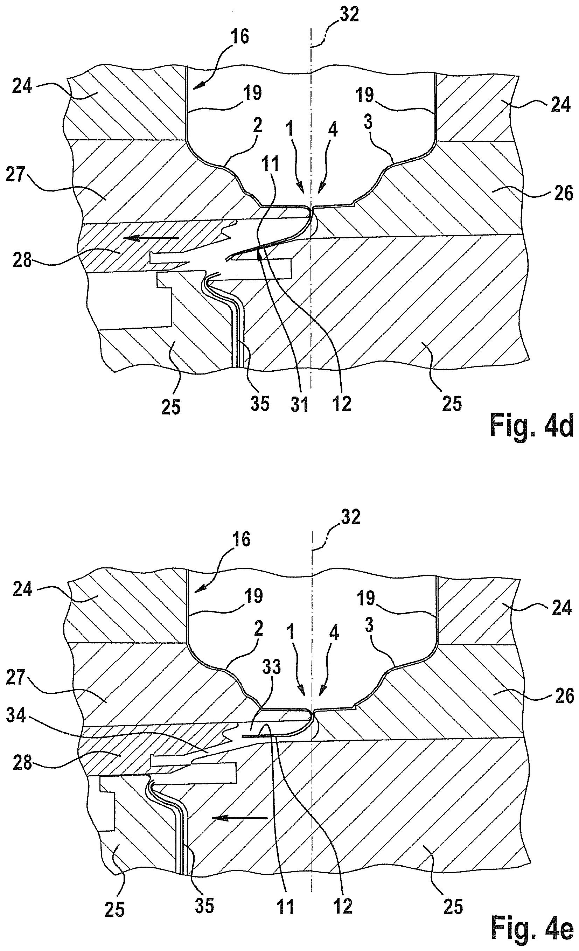

Anschließend wird (Fig. 4d) der kombinierte Roll-/Schneidstempel 28 wieder zurückgezogen. Es ergibt sich die bereits aus Figs. 3b und 4b bekannte Anordnung, wobei jedoch der doppellagige Wandbereich 31 nicht mehr durchgängig ist, sondern nunmehr ein doppelwandiger Bereich 31 aus zwei miteinander verbundenen Laschen 11, 12 vorhanden ist sowie ein hiervon abgetrenntes Wandstück 35, welches sich zwischen den beiden Muldenstempeln 25 geklemmt befindet. Das Wandstück 35 ist Abfall und kann beispielsweise durch Aufschmelzen recycelt werden, beispielsweise um bei der Produktion neuer PET-Rohlinge verwendet zu werden. Im nächsten Schritt werden nun die beiden Muldenstempel 25 in Pfeilrichtung (in Fig. 4e links) als Einheit gegenüber dem Blasform-Grundkörper 24 in Richtung des Roll-/Schneidstempels 28 verfahren. Aufgrund der Formgebung der unterschiedlichen Stempel ergibt sich somit eine "ovalartig geformte" Kammer 33, in der die beiden miteinander verbundenen Laschen 11, 12 vollständig aufgenommen sind. Der zwischen Roll-/Schneidstempel 28 und (rechtem) Muldenstempel 25 verbleibende Spalt 34 ist in Fig. 4e übertrieben groß dargestellt. Typischerweise ist der Spalt 34 im Wesentlichen geschlossen (Kontakt der beiden einander gegenüberstehenden Flächen der Stempel 25, 28), oder ist zumindest so dünn, dass die Laschen 11, 12 nicht in diesen hinein vordringen können.

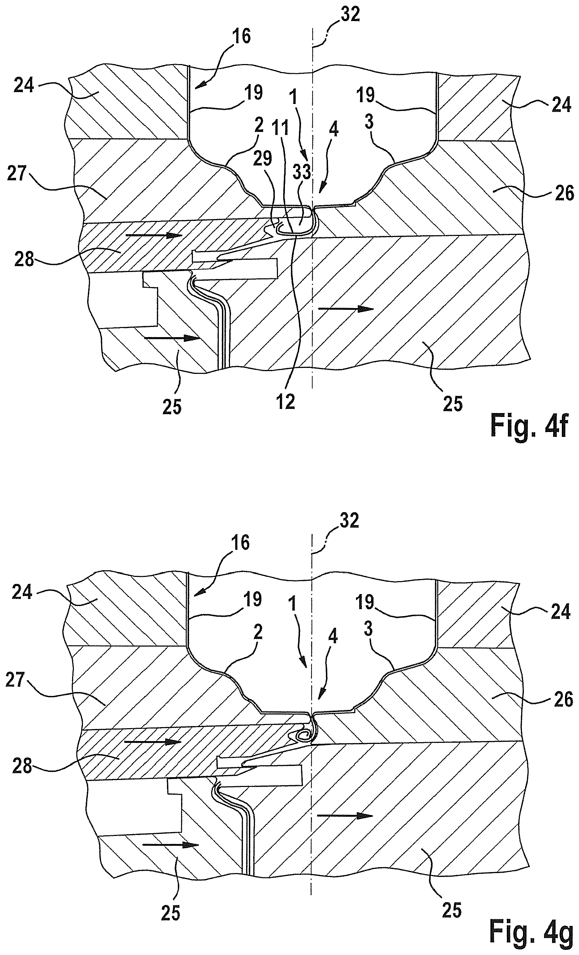

Im nächsten Produktionsschritt (Fig. 3f und 4f) werden die beiden Muldenstempel sowie der Roll-/Schneidstempel 28 als Einheit nach rechts verfahren (auf den Ambossstempel 26 zu). Hierdurch wird die Kammer 33, in der sich die beiden Laschen 11, 12 befinden, verkürzt. Aufgrund der Formgebung des Rollbereichs 29 des Roll-/Schneidstempels 28 werden die Enden der Laschen 11, 12 umgebogen und durch fortschreitende Bewegung der betreffenden Stempel 25, 28 weiter "zusammengerollt". Schlussendlich ergibt sich die in Figs. 3g und 4g gezeigte Position, in der die Kunststoffverbindungsnaht 1 fertig ausgebildet ist (im vorliegend dargestellten Ausführungsbeispiel entspricht diese im Wesentlichen dem in Fig. 1e dargestellten Ausführungsbeispiel einer Kunststoffverbindungsnaht 1e). Abweichungen hiervon sind jedoch problemlos möglich.

Abschließend wird die gesamte Form geöffnet (Blasform-Grundkörper 24, Muldenstempel 25, Ambossstempel 26, Andruckstempel 27, Roll-/Schneidstempel 28) und die fertige PET-Flasche 16 ausgeworfen.

Es ist jedoch auch möglich, im Bereich der Kunststoffverbindungsnaht 1 einseitig noch einen beispielsweise UV-aushärtbaren Klebstoff 15 aufzutragen, um hierdurch eine erhöhte Fluiddichtigkeit der Kunststoffverbindungsnaht 1 zu realisieren (vergleiche Ausführungsbeispiel gemäß Fig. 1g). Der Auftrag des UV-aushärtbaren Klebstoffs (oder anderweitigen Klebstoffs) erfolgt vorzugsweise derart, dass sich die Kunststoffflasche 16 noch geklemmt in der Form befindet (beispielsweise durch Zurückziehen von Andruckstempel 27, Roll-/Schneidstempel 28 und gegebenenfalls auch linkem Andruckstempel 25 und/oder rechtem Andruckstempel 25). Hierdurch kann der aufzubringende Klebstoff einfacher aufgebracht werden. Dieser kann anschließend durch UV-Lichteinwirkung (beispielsweise UV-Blitzlicht) in einer kurzen Zeit (ausreichend) ausgehärtet werden. Anschließend wird die PET-Flasche 16 aus dem Werkzeug ausgestoßen und kann (gegebenenfalls nach einer gewissen Wartezeit) befüllt werden.

## Patentansprüche

1. Gefäßeinrichtung, insbesondere Flascheneinrichtung (16) und/oder Kanistereinrichtung, welche als zumindest teilweise und/oder zumindest bereichsweise blasgeformter Kunststoffformkörper (16) ausgebildet ist und zumindest eine Kunststoffverbindungsnaht (1) zur fluiddichten, vorzugsweise gasdichten Verbindung zumindest zweier, zumindest bereichsweise flächenartig ausgebildeter Kunststoffwerkstückbereiche (2, 3) aufweist, **dadurch gekennzeichnet, dass** die Kunststoffverbindungsnaht (1) zumindest abschnittsweise als unter Belastung festigkeitsunterstützende Hintergreifeinrichtung ausgebildet ist, derart, dass sich zumindest bei einer in einer Standard-Belastungsrichtung einwirkenden Belastung auf Zug ihre Verbindungsfestigkeit erhöht.

2. Gefäßeinrichtung nach Anspruch 1, **dadurch gekennzeichnet, dass** die festigkeitsunterstützende Kunststoffverbindungsnaht (1) derart ausgeführt ist, dass sich in einer Mehrzahl von Belastungsrichtungen ihre Verbindungsfestigkeit erhöht, insbesondere dadurch, dass zumindest teilweise und/oder zumindest bereichsweise eine Mehrzahl von Kunststoffwerkstückbereichen (2, 3), insbesondere zwei Kunststoffwerkstückbereiche (2, 3), eine Hintergreifeinrichtung (5, 6) aufweisen.

3. Gefäßeinrichtung nach Anspruch 1 oder 2, **dadurch gekennzeichnet, dass** die Kunststoffverbindungsnaht längs eines größeren Längenanteils, insbesondere im Wesentlichen längs ihrer Gesamtlänge als festigkeitsunterstützende Kunststoffverbindungsnaht (1) ausgeführt ist.

4. Gefäßeinrichtung nach einem der vorhergehenden Ansprüche, **gekennzeichnet durch** zumindest eine zumindest abschnittsweise vorgesehene zusätzliche Fluiddichtungseinrichtung (15), wie insbesondere eine stoffschlüssige Naht, eine Schweißnaht, eine Klebstoffnaht (15) und/oder eine durch Wirkvermittlung aushärtbare Klebstoffnaht (15) .

5. Gefäßeinrichtung nach einem der vorhergehenden Ansprüche, **dadurch gekennzeichnet, dass** der Kunststoffformkörper (16) aus einem vorzugsweise spritzgegossenen und/oder extrudierten Rohling (20) gefertigt ist, insbesondere aus einem Standard-Rohling (20).

6. Gefäßeinrichtung nach einem der vorhergehenden Ansprüche, **gekennzeichnet durch** zumindest eine Durchbruchseinrichtung, welche insbesondere zur Ausbildung einer vorzugsweise hohlen Griffeinrichtung dient, wobei die über die Kunststoffverbindungsnaht miteinander verbundenen Kunststoffwerkstückbereiche Bereiche zur Ausbildung der Durchbruchseinrichtung sind.

7. Werkzeugeinrichtung (24, 25, 26, 27, 28) zur Herstellung einer zumindest teilweise und/oder zumindest bereichsweise blasgeformten Gefäßeinrichtung nach einem der Ansprüche 1 bis 6, mit einer Form zur Ausbildung der Gefäßeinrichtung und zumindest einer Kunststoffwerkstückbereichsumbiegeeinrichtung (28, 29) zur Herstellung einer fluiddichten, vorzugsweise gasdichten, Kunststoffverbindungsnaht (1) zwischen zumindest zwei, zumindest bereichsweise flächenartig ausgebildeten Kunststoffwerkstückbereichen (2, 3) der Gefäßeinrichtung, **dadurch gekennzeichnet, dass** die Kunststoffwerkstückbereichsumbiegeeinrichtung (28, 29) Teil der Form und derart ausgebildet ist, die Kunststoffverbindungsnaht (1) zumindest abschnittsweise als unter Belastung festigkeitsunterstützende Hintergreifeinrichtung auszubilden, derart, dass sich zumindest bei einer in einer Standard-Belastungsrichtung einwirkenden Belastung auf Zug ihre Verbindungsfestigkeit erhöht.

8. Werkzeugeinrichtung (24, 25, 26, 27, 28) nach Anspruch 7, **dadurch gekennzeichnet, dass** die Kunststoffwerkstückbereichsumbiegeeinrichtung (28, 29) eine Nut aufweist, die parallel zur ebenen Fläche der miteinander zu verbindenden Kunststoffwerkstückbereiche und/oder parallel zur Kantenrichtung der miteinander zu verbindenden Kunststoffwerkstückbereiche liegt.

9. Werkzeugeinrichtung (24, 25, 26, 27, 28) nach Anspruch 7 oder 8, **dadurch gekennzeichnet, dass** die zumindest eine Kunststoffwerkstückbereichsumbiegeeinrichtung (28, 29) beweglich angeordnet ist, insbesondere beweglich relativ zu anderen Teilbereichen der Werkzeugeinrichtung (24, 25, 26, 27).

10. Werkzeugeinrichtung (24, 25, 26, 27, 28) nach einem der Ansprüche 7 bis 9, **gekennzeichnet durch** eine Ablängungseinrichtung (30), welche bevorzugt integral mit zumindest einer Kunststoffwerkstückbereichsumbiegeeinrichtung (28, 29) ausgebildet ist.

11. Werkzeugeinrichtung (24, 25, 26, 27, 28) nach einem der Ansprüche 7 bis 10, **dadurch gekennzeichnet, dass** die Werkzeugeinrichtung (24, 25, 26, 27, 28) zwecks Ausbildung einer Durchbruchseinrichtung in der Gefässeinrichtung, insbesondere zur Ausbildung einer vorzugsweise hohlen Griffeinrichtung, folgendes aufweist:
- zwei Muldenstempel (25), einen Ambossstempel (26), einen Andruckstempel (27) zur Ausbildung eines doppellagigen Wandbereichs (19) durch Zusammenpressen zweier Wandbereiche des Kunststoffformkörpers (16); und
- einen kombinierten Roll-/Schneidstempel (28) zum Durchtrennen des doppellagigen Wandbereichs (19), zum Erzeugen und Zusammenpressen zweier Laschen als miteinander zu verbindende Kunststoffwerkstückbereiche sowie zum Umbiegen der beiden Laschen zu der als festigkeitsunterstützende Hintergreifeinrichtung ausgebildeten Kunststoffverbindungsnaht (1).

12. Werkzeugeinrichtung (24, 25, 26, 27, 28) nach einem der Ansprüche 7 bis 11, **gekennzeichnet durch** zumindest eine Klebstoffaufbringungseinrichtung.

13. Verfahren zur Herstellung einer fluiddichten, vorzugsweise einer gasdichten Kunststoffverbindungsnaht (1) bei einer Gefässeinrichtung nach einem der Ansprüche 1 bis 6 unter Verwendung einer Werkzeugeinrichtung (24, 25, 26, 27, 28) nach einem der Ansprüche 7 bis 12, **gekennzeichnet durch** die Schritte:
- Anordnung von zumindest zwei miteinander zu verbindenden Kunststoffwerkstückbereichen (2, 3, 11, 12) benachbart zueinander
- Verformung (29) von zumindest einem Teilbereich zumindest eines Kunststoffwerkstückbereichs (2, 3, 11, 12) derart, dass sich zumindest bereichsweise durch Ausbildung einer Hintergreifeinrichtung (5, 6) eine bei Belastung auf Zug festigkeitsunterstützende Kunststoffverbindungsnaht (1) ergibt.

14. Verfahren nach Anspruch 13, **dadurch gekennzeichnet, dass** die zumindest zwei miteinander zu verbindenden Kunststoffwerkstückbereiche (2, 3, 11, 12) zumindest teilweise übereinanderliegend angeordnet werden und/oder zumindest bereichsweise zumindest im Wesentlichen mit ihren randseitigen Kanten zueinander ausgerichtet sind.

15. Verfahren nach Anspruch 13 oder 14, **dadurch gekennzeichnet, dass** zumindest bereichsweise zumindest zwei Kunststoffwerkstückbereiche (2, 3, 11, 12) zur Ausbildung zumindest einer festigkeitsunterstützenden Kunststoffverbindungsnaht (1) verformt (29) werden.

16. Verfahren nach einem der Ansprüche 13 bis 15, **dadurch gekennzeichnet, dass** zumindest ein Kunststoffwerkstückbereich (2, 3, 11, 12) durch einen Verformungsvorgang unter zumindest teilweiser Verwendung eines Verformungsvorgangs durch Veränderung von zumindest Teilbereichen der Werkzeugeinrichtung (24, 25, 26, 27, 28) verformt werden.

17. Verfahren nach einem der Ansprüche 13 bis 16, **dadurch gekennzeichnet, dass** zumindest ein Kunststoffwerkstückbereich einem Ablängungsvorgang (30) unterzogen wird.

## Claims

1. A vessel device, in particular bottle device (16) and/or canister device, which is formed at least partially and/or at least area by area as blow molded plastics mold (16), and has at least one plastics connecting seam (1) for the fluid-tight, preferably gas-tight connection of at least two plastics workpiece areas (2, 3), which are formed in a flat manner at least area by area, **characterized in that** the plastics connecting seam (1) is embodied at least in sections as engage-behind device, which supports strength under a load in such a way that, at least under a tensile load acting in a standard load direction, the connection strength of the plastics connecting seam increases.

2. The vessel device according to claim 1, **characterized in that** the plastics connecting seam (1), which supports strength, is embodied in such a way that the connecting strength thereof increases in a plurality of load directions, in particular **in that** a plurality of plastics workpiece areas (2, 3), in particular two plastics workpiece areas (2, 3), have an engage-behind device (5, 6), at least partially and/or at least area by area.

3. The vessel device according to claim 1 or 2, **characterized in that** the plastics connecting seam is embodied as plastics connecting seam (1), which supports strength, along a larger length portion, in particular substantially along its total length.

4. The vessel device according to one of the preceding claims, **characterized by** at least one additional fluid sealing device (15), which is at least provided in sections, such as in particular a firmly bonded seam, a weld seam, an adhesive seam (15) and/or an adhesive seam (15), which can be hardened by active connection.

5. The vessel device according to one of the preceding claims, **characterized in that** the plastics mold (16) is made of a preferably injection molded and/or extruded blank (20), in particular of a standard blank (20).

6. The vessel device according to one of the preceding claims, **characterized by** at least one aperture device, which serves in particular for forming a preferably hollow handle device, wherein the plastics workpiece areas, which are connected to one another via the plastics connecting seam, are areas for forming the aperture device.

7. A tool device (24, 25, 26, 27, 28) for producing a vessel device, which is formed at least partially and/or at least area by area as blow molded vessel device, according to one of claims 1 to 6, comprising a mold for forming the vessel device and at least one plastics workpiece area bending device (28, 29) for producing a fluid-tight, preferably gas-tight, plastics connecting seam (1) between at least two plastics workpiece areas (2, 3) of the vessel device, which are formed in a flat manner at least area by area, **characterized in that** the plastics workpiece area bending device (28, 29) is part of the mold and is formed so as to form the plastics connecting seam (1) at least in sections as engage-behind device, which supports strength under load in such a way that, at least under a tensile load acting in a standard load direction, the connection strength of the plastics connecting seam increases.

8. The tool device (24, 25, 26, 27, 28) according to claim 7, **characterized in that** the plastics workpiece area bending device (28, 29) has a groove, which is located parallel to the flat surface of the plastics workpiece areas, which are to be connected to one another, and/or parallel to the edge direction of the plastics workpiece areas, which are to be connected to one another.

9. The tool device (24, 25, 26, 27, 28) according to claim 7 or 8, **characterized in that** the at least one plastics workpiece area bending device (28, 29) is arranged in a movable manner, in particular so as to be movable relative to other partial areas of the tool device (24, 25, 26, 27) .

10. The tool device (24, 25, 26, 27, 28) according to one of claims 7 to 9, **characterized by** a trimming device (30), which is preferably formed integrally with at least one plastics workpiece area bending device (28, 29) .

11. The tool device (24, 25, 26, 27, 28) according to one of claims 7 to 10, **characterized in that** the tool device (24, 25, 26, 27, 28) has the following for the purpose of forming an aperture device in the vessel device, in particular for forming a preferably hollow handle device:
- two groove dies (25), an anvil die (26), a pressure die (27) for forming a double-layer wall area (19) by compressing two wall areas of the plastics mold (16); and
- a combined rolling/cutting die (28) for severing the double-layer wall area (19), for creating and compressing two tabs as plastics workpiece areas, which are to be connected to one another, as well as for bending the two tabs in order to provide the plastics connecting seam (1), which is formed as engage-behind device, which supports strength.

12. The tool device (24, 25, 26, 27, 28) according to one of claims 7 to 11, **characterized by** at least one adhesive application device.

13. A method for producing a fluid-tight, preferably a gas-tight, plastics connecting seam (1) in the case of a vessel device according to one of claims 1 to 6 by using a tool device (24, 25, 26, 27, 28) according to one of claims 7 to 12, **characterized by** the steps of:
- arranging at least two plastics workpiece areas (2, 3, 11, 12), which are to be connected to one another, adjacent to one another
- deforming (29) at least one partial area of at least one plastics workpiece area (2, 3, 11, 12) in such a way that a plastics connecting seam (1), which supports strength under a tensile load, results at least area by area by forming an engage-behind device (5, 6).

14. The method according to claim 13, **characterized in that** the at least two plastics workpiece areas (2, 3, 11, 12), which are to be connected to one another, are arranged so as to at least partially lie on top of one another and/or that the edges on the edge side thereof are at least substantially oriented towards one another, at least area by area.

15. The method according to claim 13 or 14, **characterized in that** at least two plastics workpiece areas (2, 3, 11, 12) are deformed (29), at least area by area, for forming at least one plastics connecting seam (1), which supports strength,.

16. The method according to one of claims 13 to 15, **characterized in that** at least one plastics workpiece area (2, 3, 11, 12) is deformed by means of a deformation process by at least partially using a deformation process by changing at least partial areas of the tool device (24, 25, 26, 27, 28).

17. The method according to one of claims 13 to 16, **characterized in that** at least one plastics workpiece area is subjected to a trimming process (30).

## Revendications

1. Système de récipient, notamment système de bouteille (16) et/ou système de bidon, lequel est conçu sous la forme d'un corps moulé en matière plastique (16) moulé par soufflage au moins partiellement et/ou au moins par endroits et comporte au moins un joint de soudure de matière plastique (1) pour l'assemblage étanche aux fluides, de préférence étanche aux gaz d'au moins deux zones de pièce à usiner en matière plastique (2, 3), conçues au moins par endroits sous forme plane, **caractérisé en ce que** le joint de soudure de matière plastique (1) est conçu au moins par segments sous la forme d'un système d'accrochage par l'arrière assistant la solidité sous contrainte, de telle sorte qu'au moins sous une contrainte en traction agissant dans une direction de contrainte standard, sa solidité d'assemblage augmente.

2. Système de récipient selon la revendication 1, **caractérisé en ce que** le joint de soudure de matière plastique (1) assistant la solidité est réalisé de telle sorte que dans une pluralité de directions de contrainte, sa solidité d'assemblage augmente, notamment **en ce qu'**au moins par endroits, une pluralité de zones de pièce à usiner en matière plastique (2, 3), notamment deux zones de pièce à usiner en matière plastique (2, 3) comportent un système d'accrochage par l'arrière (5, 6).

3. Système de récipient selon la revendication 1 ou 2, **caractérisé en ce que** le long d'une majeure partie longitudinale, notamment sensiblement le long de sa longueur totale, le joint de soudure de matière plastique est réalisé sous la forme d'un joint de soudure de matière plastique (1) assistant la solidité.

4. Système de récipient selon l'une quelconque des revendications précédentes, **caractérisé par** au moins un système d'étanchéité au fluide (15) supplémentaire, prévu au moins par segments, tel que notamment un joint par liaison de matière, un joint de soudure, un joint par agent adhésif (15) et/ou un joint par agent adhésif (15) durcissable par interaction.

5. Système de récipient selon l'une quelconque des revendications précédentes, **caractérisé en ce que** le corps moulé en matière plastique (16) est fabriqué à partir d'une ébauche (20) de préférence moulée par injection et/ou extrudée, notamment d'une ébauche standard (20).

6. Système de récipient selon l'une quelconque des revendications précédentes, **caractérisé par** au moins un système d'ajourage, lequel sert notamment à créer un système de préhension, creux de préférence, les zones de pièce à usiner en matière plastique assemblées l'une à l'autre par l'intermédiaire du joint de soudure de matière plastique étant des zones destinées à créer le système d'ajourage.

7. Système d'outils (24, 25, 26, 27, 28), destiné à créer un système de récipient, moulé par soufflage au moins partiellement et/ou au moins par endroits selon l'une quelconque des revendications 1 à 6, pourvu d'un moule, destiné à concevoir le système de récipient et d'au moins un (28, 29), destiné à créer un joint de soudure de matière plastique (1) étanche aux fluides, de préférence étanche aux gaz entre au moins deux zones de pièce à usiner en matière plastique (2, 3), conçues au moins par endroits sous forme plane du système de récipient, **caractérisé en ce que** le système de cintrage de zones de pièce à usiner (28, 29) est une partie du moule et est conçu de telle sorte que le joint de soudure de matière plastique (1) soit réalisé au moins par segments sous la forme d'un système d'accrochage par l'arrière assistant la solidité sous contrainte, de telle sorte qu'au moins sous une contrainte en traction agissant dans une direction de contrainte standard, sa solidité d'assemblage augmente.

8. Système d'outils (24, 25, 26, 27, 28) selon la revendication 7, **caractérisé en ce que** le système de cintrage de zones de pièce à usiner (28, 29) comporte une rainure qui se situe à la parallèle de la surface plane des zones de pièce à usiner en matière plastique qu'il convient d'assembler et/ou à la parallèle de la direction d'arête des zones de pièce à usiner en matière plastique qu'il convient d'assembler.

9. Système d'outils (24, 25, 26, 27, 28) selon la revendication 7 ou 8, **caractérisé en ce que** l'au moins un système de cintrage de zones de pièce à usiner (28, 29) est placé de manière mobile, notamment mobile par rapport à d'autres zones partielles du système d'outils (24, 25, 26, 27).

10. Système d'outils (24, 25, 26, 27, 28) selon l'une quelconque des revendications 7 à 9, **caractérisé par** un système de coupe en longueur (30), lequel est conçu de préférence intégralement avec au moins un système de cintrage de zones de pièce à usiner (28, 29).

11. Système d'outils (24, 25, 26, 27, 28) selon l'une quelconque des revendications 7 à 10, **caractérisé en ce qu'**afin de créer un système d'ajourage dans le système de récipient, notamment afin de créer un système de préhension, de préférence creux, le système d'outils (24, 25, 26, 27, 28) comporte ce qui suit :
- deux poinçons de creusage (25), un poinçon d'enclume (26), un poinçon de pression (27), pour créer une zone de paroi (19) à double couche par compression de deux zones de paroi du corps moulé en matière plastique (16) ;
et
- un poinçon de roulage/poinçon de coupe mixte (28), destiné à sectionner la zone de paroi (19) à double couche, pour concevoir et comprimer deux pattes, en tant que zones de pièce à usiner en matière plastique qu'il convient d'assembler et pour cintrer les deux pattes, pour obtenir le joint de soudure de matière plastique (1) conçu sous la forme d'un système d'accrochage par l'arrière.

12. Système d'outils (24, 25, 26, 27, 28) selon l'une quelconque des revendications 7 à 11, **caractérisé par** au moins un système d'application d'agent adhésif.

13. Procédé, destiné à créer un joint de soudure de matière plastique (1) étanche aux fluides, de préférence étanche aux gaz sur un système de récipient selon l'une quelconque des revendications 1 à 6, en utilisant un système d'outils (24, 25, 26, 27, 28) selon l'une quelconque des revendications 7 à 12, **caractérisé par** les étapes consistant à :
- placer au moins deux zones de pièce à usiner en matière plastique (2, 3, 11, 12) voisines l'une de l'autre, qu'il convient d'assembler
- déformer (29) au moins une zone partielle d'au moins une zone de pièce à usiner en matière plastique (2, 3, 11, 12) de telle sorte, qu'au moins par endroits, par réalisation d'un système d'accrochage par l'arrière (5, 6), il résulte un joint de soudure de matière plastique (1) assistant la solidité en cas de contrainte sous traction.

14. Procédé selon la revendication 13, **caractérisé en ce qu'**on place au moins partiellement en superposition les au moins deux zones de pièce à usiner en matière plastique (2, 3, 11, 12) qu'il convient d'assembler et/ou on les aligne au moins par endroits, au moins sensiblement l'une par rapport à l'autre par leurs arêtes marginales.

15. Procédé selon la revendication 13 ou 14, **caractérisé en ce qu'**on déforme (29) au moins par endroits au moins deux zones de pièce à usiner en matière plastique (2, 3, 11, 12), pour créer au moins un joint de soudure de matière plastique (1) assistant la solidité.

16. Procédé selon l'une quelconque des revendications 13 à 15, **caractérisé en ce qu'**on déforme au moins une zone de pièce à usiner en matière plastique (2, 3, 11, 12) par un processus de déformation, en utilisant au moins partiellement un processus de déformation par modification d'au moins des zones partielles du système d'outils (24, 25, 26, 27, 28).

17. Procédé selon l'une quelconque des revendications 13 à 16, **caractérisé en ce qu'**on soumet au moins une zone de pièce à usiner en matière plastique à un processus de coupe en longueur (30).
